# EUROPÄISCHE PATENTSCHRIFT

(11) **EP 4 202 872 B1**
(45) Veröffentlichungstag und Bekanntmachung des Hinweises auf die Patenterteilung: **13.05.2026**
(21) Anmeldenummer: 21216904.9
(22) Anmeldetag: 22.12.2021
(51) Int. Cl.: G07C 1/10, G06F 1/3215, G06F 1/3231, G06F 1/3234, G06F 1/3287, G06F 3/01, G06F 3/03, G06F 3/16

(54) **ANWESENHEITSERFASSUNGS-TERMINAL MIT ENERGIESPARMODUS**
PRESENCE DETECTION TERMINAL WITH LOW ENERGY MODE
TERMINAL DE DÉTECTION DE LA PRÉSENCE À MODE D'ÉCONOMIE D'ÉNERGIE

(43) Veröffentlichungstag der Anmeldung: 28.06.2023
(73) Patentinhaber: dormakaba Deutschland GmbH, 58256 Ennepetal (DE)
(72) Erfinder: Meiss, Elmar, 78056 Villingen-Schwenningen (DE); Ruof, Martin, 78056 Villingen-Schwenningen (DE)
(74) Vertreter: Balder IP Law, S.L.

(56) Entgegenhaltungen:
- US-A1- 2008 126 815
- US-A1- 2013 048 716
- US-A1- 2016 124 485
- US-A1- 2017 289 766

## Beschreibung

Die vorliegende Erfindung betrifft ein Anwesenheitserfassungs-Terminal, nämlich ein Zeiterfassungs-Terminal, zur Erfassung einer Anwesenheitsinformation einer Person auf Basis einer Aktion der Person. Weiterhin betrifft die vorliegende Erfindung ein computerimplementiertes Verfahren zum Betreiben eines entsprechenden Anwesenheitserfassungs-Terminals, nämlich Zeiterfassungs-Terminals, zur Erfassung einer Anwesenheitsinformation einer Person auf Basis einer Aktion der Person, sowie ein entsprechendes Computerprogramm.

Anwesenheitserfassungs-Terminals sind insbesondere in der Arbeitswelt zur Erfassung der Anwesenheit eines/einer Mitarbeiters/-in weit verbreitet. Anwesenheitserfassungs-Terminals befinden sich häufig in Bürogebäuden, Fabrikhallen oder etwa auch Krankenhäusern. Mithilfe der Anwesenheitserfassungs-Terminals wird ein System bereitgestellt, was eine elektronische Erfassung und Speicherung von Mitarbeiteranwesenheiten erlaubt. Ein Zeiterfassungs-Terminals dient auch zur Erfassung und Speicherung der absolvierten Arbeitszeiten. Allgemein wird in diesem Zusammenhang vorliegend von der Anwesenheitsinformation einer Person gesprochen, welche Person sich etwa über das Anwesenheitserfassungs-Terminal zur Arbeit einbuchen oder beispielsweise für eine Pause oder am Ende des Arbeitstags ausloggen bzw. aus dem System ausbuchen möchte.

Anwesenheitserfassungs-Terminals erlauben es zentral, etwa an einer Stelle im Eingangsbereich eines Bürogebäudes oder aber auch auf jeder Etage bzw. in jeder Abteilung eines Gebäudes/Unternehmens, einen Punkt zur Interaktion für die Personen bereitzustellen, über welchen einfach die Buchungsvorgänge realisiert werden können. Dem Arbeitgeber steht dann ein zentrales System zur Verfügung, etwa über die Speicherverwaltungseinheit des Anwesenheitserfassungs-Terminals, über welches/welche der Arbeitgeber ohne großen Aufwand die Anwesenheitsinformationen der Personen nachhalten kann.

Übliche Anwesenheitserfassungs-Terminals, von denen die vorliegende Erfindung ausgeht, weisen eine Steuereinheit auf sowie ferner zumindest eine Sensoreinheit, die eine an das Anwesenheitserfassungs-Terminal angrenzende Umgebungszone beobachtet. Dazu kann die Sensoreinheit beispielsweise einen Infrarot-Sensor umfassen. Um möglichst energiesparend betrieben zu werden, kann ein Energiesparmodus vorgesehen sein, welcher nachfolgend beispielsweise als zweiter Betriebszustand des Anwesenheitserfassungs-Terminals bezeichnet werden soll. Von jenem zweiten Betriebszustand (energiesparender Modus) kann die Steuereinheit das Anwesenheitserfassungs-Terminal in einen ersten Betriebszustand versetzt werden, etwa um in jenem höheren, ersten Betriebszustand eine Interaktion der Person mit dem Anwesenheitserfassungs-Terminal zuzulassen.

Um in dem ersten Betriebszustand sodann konkret die Interaktion ablaufen zu lassen, weisen Anwesenheitserfassungs-Terminals regelmäßig zumindest eine intent engine (Absichtserkennungseinrichtung) auf. Die intent engine stellt eine Einrichtung dar, um die Absicht der Interaktion einer Person mit dem Anwesenheitserfassungs-Terminal festzustellen, wobei durch die intent engine eine entsprechende Absichtsinformation ausgegeben wird, welche Absichtsinformation zwecks Buchung einer Anwesenheitsinformation der Person dann weiterverarbeitet werden kann. Die intent engine kann durch eine Software im Anwesenheitserfassungs-Terminal bzw. im Rahmen der Steuereinheit realisiert sein bzw. eine Software umfassen.

Üblicherweise nutzen bekannte Anwesenheitserfassungs-Terminals beim Wechsel vom Energiesparmodus in den ersten Betriebszustand eine einfache simple Erkennung mittels der Sensoreinheit, also zum Beispiel mithilfe des Infrarot-Sensors, ob bzw. dass sich eine Person in der Nähe des Anwesenheitserfassungs-Terminals, also in der Umgebungszone, befindet. Wird eine Person in der Umgebungszone detektiert, so schaltet das Anwesenheitserfassungs-Terminal von dem energiesparenden zweiten Betriebszustand in den eine Interaktion erlaubenden höheren, ersten Betriebszustand um. So können durch den Wechsel in den ersten Betriebszustand sodann in der Regel alle für die Interaktion notwendigen Einheiten des Anwesenheitserfassungs-Terminals, wie etwa ein Display zur Anzeige oder gar zur Interaktion, die intent engine zur Erfassung der Absicht, sowie weitere Einrichtungen hochgefahren bzw. angeschaltet bzw. betriebsbereit geschaltet werden.

US 2013/048716 A1 offenbart Systeme und Verfahren, mit denen ein Karteninhaber die Benutzeroberfläche eines Terminals in einem Zugangskontroll- oder Zeiterfassungssystem anpassen kann. Die Verfahren umfassen den Empfang von Benutzerinformationen von einem Karteninhaber oder von einer Karte und die Aktualisierung mindestens einer Terminaleigenschaft auf der Grundlage der empfangenen Benutzerinformationen. Ein Display des Terminals kann in einen Sleep mode versetzt werden. Das Display des Terminals kann in einen An-Modus versetzt werden, wenn eine Karte in einer Entfernung von etwa 1m vom Terminal detektiert wird.

US 2017/0289766 A1 offenbart Techniken für digitale Assistentenerlebnisse, die auf Anwesenheitserfassung basieren. Ein System ist in der Lage, die Anwesenheit eines Benutzers und die Entfernung von einem Referenzpunkt zu erkennen und ein digitales Assistentenerlebnis auf der Grundlage der Entfernung anzupassen. Die Entfernung stellt die Entfernung zu einem Client-Gerät dar, das verschiedene Elemente eines digitalen Assistentenerlebnisses ausgibt. Das Client-Gerät enthält einen System behavior manager. Der System behavior manager kann die Anwesenheit eines Nutzers in einem Nahbereich erfassen, woraufhin das Client-Gerät von einem Low energy-Modus in einen aktiven Modus versetzt werden kann.

Vor diesem Hintergrund ist eine der vorliegenden Erfindung zugrundeliegende Aufgabe, ein Anwesenheitserfassungs-Terminal bereitzustellen, bei dem die Energieeffizienz weiter gesteigert wird.

Weiterhin liegt der vorliegenden Erfindung die Aufgabe zugrunde, ein entsprechendes computerimplementiertes Verfahren zum Betreiben eines Anwesenheitserfassungs-Terminals bzw. ein entsprechendes Computerprogramm bereitzustellen, um die Energieeffizienz weiter zu steigern.

Erfindungsgemäß werden die genannten Aufgaben durch das vorschlagsgemäße Anwesenheitserfassungs-Terminal, nämlich Zeiterfassungs-Terminal, zur Erfassung einer Anwesenheitsinformation einer Person auf Basis einer Aktion der Person, sowie durch das vorschlagsgemäße computerimplementierte Verfahren zum Betreiben eines Anwesenheitserfassungs-Terminals, sowie durch das vorschlagsgemäße Computerprogramm mit den Merkmalen der entsprechenden unabhängigen Ansprüche gelöst. Darüber hinaus sind bevorzugte Ausführungsformen den abhängigen Ansprüchen sowie der Beschreibung zu entnehmen.

Im Einzelnen ist ein Anwesenheitserfassungs-Terminal zur Erfassung einer Anwesenheitsinformation einer Person auf Basis einer Aktion der Person vorgeschlagen. Bei dem vorschlagsgemäßen Anwesenheitserfassungs-Terminal handelt es sich um ein Zeiterfassungs-Terminal. Dabei umfasst das vorschlagsgemäße Anwesenheitserfassungs-Terminal:
- eine Steuereinheit,
- wenigstens eine Sensoreinheit, wobei die Sensoreinheit zur Beobachtung einer Umgebungszone eingerichtet ist, und
- eine intent engine, wobei die intent engine zur Erfassung einer Absicht einer Interaktion der Person mit dem Anwesenheitserfassungs-Terminal und zur Ausgabe einer Absichtsinformation eingerichtet ist.

Die Steuereinheit ist eingerichtet, das Anwesenheitserfassungs-Terminal wenigstens in einen ersten Betriebszustand und in einen zweiten Betriebszustand zu versetzen, wobei das Anwesenheitserfassungs-Terminal in dem zweiten Betriebszustand in einen energiesparenden Modus im Vergleich zu dem ersten Betriebszustand versetzt ist. Das Anwesenheitserfassungs-Terminal ist dadurch gekennzeichnet, dass die Steuereinheit derart eingerichtet ist, dass das Anwesenheitserfassungs-Terminal in Abhängigkeit von der Absichtsinformation von dem zweiten Betriebszustand in den ersten Betriebszustand wechselt.

In Bezug auf das computerimplementierte Verfahren ist im Einzelnen ein computerimplementiertes Verfahren zum Betreiben eines Anwesenheitserfassungs-Terminals, nämlich Zeiterfassungs-Terminals, zur Erfassung einer Anwesenheitsinformation einer Person auf Basis einer Aktion der Person vorgeschlagen, welches Verfahren zumindest die folgenden Schritte umfasst:
- Beobachten einer Umgebungszone mit wenigstens einer Sensoreinheit,
- Erfassen einer Absicht einer Interaktion der Person mit dem Anwesenheitserfassungs-Terminal durch eine intent engine, wobei eine Absichtsinformation generiert wird, und
- Versetzen des Anwesenheitserfassungs-Terminals von einem zweiten Betriebszustand in einen ersten Betriebszustand, wobei das Anwesenheitserfassungs-Terminal in dem zweiten Betriebszustand in einem energiesparenden Modus im Vergleich zu dem ersten Betriebszustand betrieben wird.

Das computerimplementierte Verfahren zum Betreiben eines Anwesenheitserfassungs-Terminals ist dadurch gekennzeichnet, dass zuerst die Absicht der Interaktion der Person mit dem Anwesenheitserfassungs-Terminal erfasst wird und sodann das Anwesenheitserfassungs-Terminal in Abhängigkeit von der Absichtsinformation von dem zweiten Betriebszustand in den ersten Betriebszustand wechselt.

Die im Rahmen des vorschlagsgemäßen Anwesenheitserfassungs-Terminals beschriebenen Merkmale und Vorteile sind entsprechend auf das vorschlagsgemäße computerimplementierte Verfahren zum Betreiben eines Anwesenheitserfassungs-Terminals übertragbar. Dabei kann das computerimplementierte Verfahren zum Betreiben jenes vorschlagsgemäßen und beschriebenen Anwesenheitserfassungs-Terminals eingerichtet sein. Das vorschlagsgemäße und beschriebene Anwesenheitserfassungs-Terminal wiederum ist bevorzugt zur Ausführung des vorschlagsgemäßen computerimplementierten Verfahrens zum Betreiben eines Anwesenheitserfassungs-Terminals eingerichtet. Insofern werden die das Anwesenheitserfassungs-Terminal bzw. das Verfahren zum Betreiben des Anwesenheitserfassungs-Terminals betreffenden Merkmale und spezifische Vorteile regelmäßig gemeinsam nur einfach beschrieben. Im Zusammenhang mit der Vorrichtung des Anwesenheitserfassungs-Terminals beschriebene Merkmale sind entsprechend in das computerimplementierte Verfahren betreffende Ansprüche aufnehmbar und umgekehrt.

Ein wesentlicher Vorteil der vorliegenden Erfindung ist, dass das Anwesenheits-Erfassungsterminal (kurz: Terminal) vorteilhaft erst aus einem energiesparenden Modus geweckt wird, wenn klar ist, dass eine Interaktion der sich in der Nähe befindlichen Person mit dem Terminal gewünscht ist. Bei einer simplen Annäherung der Person findet noch kein Wechsel in den ersten Betriebszustand statt, sondern erst, wenn auch klar, dass eine Interaktion gewünscht ist. Demnach bleibt das Terminal in einem Energiesparmodus, selbst wenn Personen an dem Terminal einfach vorbeilaufen. Dies ist besonders vorteilhaft in einem Unternehmensumfeld, wie etwa einer Fabrikhalle oder auch einem Krankenhaus, wo um das Terminal herum viel Betrieb ist und demnach viele Personen das Terminal passieren. Es wird dann solange das Terminal energiesparsam betrieben, bis klar ist, dass eine vorbeilaufende Person auch eine Interaktion wünscht.

Dazu kann die Sensoreinheit zur Ausgabe einer aus der Beobachtung der Umgebungszone detektierten Präsenzinformation der Person eingerichtet sein. Die Steuereinheit ist dann derart eingerichtet, dass das Anwesenheitserfassungs-Terminal nicht allein in Abhängigkeit von der detektierten Präsenzinformation der Person von dem zweiten Betriebszustand in den ersten Betriebszustand wechselt. Dies unterscheidet das vorschlagsgemäße Anwesenheitserfassungs-Terminal bzw. computerimplementierte Verfahren von üblichen aus dem Stand der Technik, welche von einem energiesparenden Modus in einen weniger energiesparenden Betriebszustand allein aufgrund der erfassten Anwesenheit einer Person wechseln, etwa auf Grundlage von einem mittels Infrarot-Sensors simpel erfassten Signals, welches repräsentativ für die einfache Anwesenheit einer Person steht. Das vorschlagsgemäße Anwesenheitserfassungs-Terminal kann bzw. gemäß dem vorschlagsgemäßen computerimplementierten Verfahren können vielmehr vorteilhaft diejenigen Personen, die gar nicht mit dem Anwesenheitserfassungs-Terminal interagieren möchten, herausfiltern/herausgefiltert werden. Damit kann das Anwesenheitserfassungs-Terminal in einen höheren Betriebszustand wechseln, wenn eine Person mit der Absicht zur Interaktion erkannt wurde.

Bei dem ersten Betriebszustand handelt es sich demnach um den wacheren Betriebszustand, in dem das Anwesenheitserfassungs-Terminal alle bestimmungsgemäßen Operationen durchführen kann. Insofern kann der erste Betriebszustand auch als "wake up mode" bezeichnet werden. Der zweite Betriebszustand stellt wiederum einen "ECO mode" dar, also einen Energiesparmodus. In jenem Zustand können beispielsweise ein Display oder auch die Speicherverwaltungseinheit bzw. auch andere nicht unbedingt notwendige Einrichtungen (engines) ausgeschaltet bzw. deaktiviert sein. Auf diese Weise lässt sich das Anwesenheitserfassungs-Terminal energiesparender betreiben.

Hierzu kann etwa der detektierten Präsenzinformation eine weitere Information zugeordnet werden, aus der sich schließen lässt, dass auch wirklich eine Interaktion der Person mit dem Terminal gewünscht ist. Die weitere Information kann beispielsweise eine Entfernungsinformation sein, woraus geschlossen werden kann, dass die Person sich nicht lediglich in der Umgebungszone aufhält, sondern sich bereits dem Terminal weiter genähert hat. Daraus kann beispielsweise geschlossen werden, dass eine Interaktion wohl gewünscht ist und demnach ein Versetzen in den ersten Betriebszustand durchgeführt werden. Die weitere Information kann auch das Bewegungsmuster der Person sein, etwa die beispielsweise mittels Kamera-Tracking erfasste Bewegungsrichtung oder Bewegungsgeschwindigkeit der Person, woraus ebenfalls der Wunsch der Interaktion geschlossen werde kann. Weiterhin kann auch eine aktive Signaleingabe durch die Person, sei es aus der Ferne in Form einer Sprach- und/oder Gesteneingabe, als weiter Information dienen und somit dazu verwendet werden, dass geschlossen wird, dass eine Interaktion gewünscht ist und demnach der erste Betriebszustand eingeschaltet werden.

Vorzugsweise ist die Sensoreinheit und/oder die intent engine permanent betriebsbereit bzw. wach und nicht etwa in dem zweiten Betriebszustand ausgeschaltet.

Die wenigstens eine Sensoreinheit beobachtet die Umgebungszone in der Nähe des Anwesenheitserfassungs-Terminals, wie etwa einen Flur eines Bürogebäudes beim Anwesenheitserfassungs-Terminal oder einen Eingangsbereich eines Gebäudes oder einer Etage. Hier werden die Personen erwartet, die in Interaktion mit dem Anwesenheitserfassungs-Terminal treten. Die Sensoreinheit kann einen oder mehrere Sensoren umfassen. Es können auch verschiedene Sensoreinheiten bzw. Sensoren vorgesehen sein. Die Sensoreinheit bzw. Sensoren können als integraler Bestandteil des Anwesenheitserfassungs-Terminals etwa in seinem Gehäuse eingebunden sein oder ganz oder teilweise außerhalb des regelmäßig an bzw. in der Nähe einer Wand montierten Anwesenheitserfassungs-Terminal angeordnet sein. Dann kann vorteilhaft eine Kommunikationsverbindung zwischen der Sensoreinheit und dem Anwesenheitserfassungs-Terminal, insbesondere seiner Steuereinheit, vorgesehen sein.

Die Sensoreinheit stellt auf Grundlage der Beobachtung eine detektierten Präsenzinformation der in der Umgebungszone erfassten Person bereit. Dabei kann es sich lediglich um die Information handeln, dass eine Person anwesend ist. Oder aber es kann auch ein höherer Detailgrad der detektierten Präsenzinformation vorliegen, indem etwa ein Foto der Person als detektierten Präsenzinformation ausgegeben wird.

Die Steuereinheit kann als integraler Bestandteil des Anwesenheitserfassungs-Terminals ausgebildet sein oder auch separat. So kann die Steuereinheit beispielsweise auch an einem anderen Ort als innerhalb eines Gehäuses des Anwesenheitserfassungs-Terminals oder etwa online abgebildet sein und über eine Kommunikationsverbindung mit dem Anwesenheitserfassungs-Terminal kommunizieren und Vorgänge wie etwa Buchungsvorgänge steuern.

Die Speicherverwaltungseinheit kann lokal vorgesehen sein und beispielsweise integrierter Bestandteil des Anwesenheitserfassungs-Terminals sein. Alternativ kann die Speicherverwaltungseinheit ebenso online in einer Cloud vorgesehen sein. Sodann kann das Anwesenheitserfassungs-Terminal etwa über die Steuereinheit eine Onlineverbindung zu der Speicherverwaltungseinheit herstellen und auf diese Weise mit der Speicherverwaltungseinheit kommunizieren. Die Speicherverwaltungseinheit kann zum Verarbeiten und Speichern der Anwesenheitsinformation der Person eingerichtet sein.

In der Speicherverwaltungseinheit können Stammsätze von Mitarbeiterdaten gespeichert sein. Dort hinterlegte personenspezifische Daten können beispielsweise Informationen über die Arbeitszeiten der Person, die Sprache, die die Person spricht, um eine spezifische Interaktion mit dem Anwesenheitserfassungs-Terminal zu ermöglichen, oder zwecks nutzerspezifischer Interaktion auch individuelle Vorlieben oder Voraussetzungen gespeichert sein. Beispielsweise kann dort hinterlegt sein, wenn eine Sehbehinderung oder Hörbehinderung einer Person vorliegt, um eine individuell an die Bedürfnisse angepasste Interaktion zu ermöglichen.

Die intent engine kann auch Absichtserkennungseinrichtung genannt werden. Sie stellt eine Einrichtung dar, um die Absicht der Interaktion einer Person mit dem Anwesenheitserfassungs-Terminal festzustellen. Es wird durch die intent engine eine entsprechende Absichtsinformation ausgegeben. Die intent engine kann durch eine Software im Anwesenheitserfassungs-Terminal realisiert sein bzw. eine Software umfassen.

Dabei können verschiedene Daten von der intent engine zugrunde gelegt werden, um die Absicht der Person zu erfassen. So können zum einen in einem Stammsatz der Person hinterlegte Daten als eine Variable zur Auswertung zur Verfügung stehen, etwa wenn die Schicht bzw. die Arbeitszeit der interagierenden Person beginnt bzw. es sich allgemein um eine Uhrzeit zu Beginn des Arbeitstages handelt und die Person am Anwesenheitserfassungs-Terminal erscheint, um sich vermutlich zur Arbeit einzubuchen. Es können auch die durch die Sensoreinheit oder andere Sensoren erfassten Bewegungsdaten zugrunde gelegt werden. Beispielsweise kann zur Erfassung dienen, ob sich eine Person in Richtung Gebäudeinneres oder in Richtung Ausgang bewegt, bzw. wie die Bewegungsgeschwindigkeit der Person ist.

Es ist auch möglich, dass mehr Aktionen am Anwesenheitserfassungs-Terminal vorgenommen werden können als lediglich Einbuchungs- oder Ausbuchungsvorgänge. So kann es möglich sein, dass eine Person etwa ein auf seiner Schlüsselkarte oder seinem Badge hinterlegtes Guthaben, etwa zur Nutzung in einer Kantine, abfragen möchte. Die intent engine kann dann beispielsweise auch die Uhrzeit in die Analyse einfließen lassen, welche Absicht hinter der Interaktion der Person mit dem Anwesenheitserfassungs-Terminal liegt, da etwa insbesondere zu Mittagszeiten regelmäßig das Guthaben abgefragt wird.

Auch vorbestimmte Arten von Bewegungen, etwa der Schlüsselkarte bzw. des Badges, durch die Person, die mit dem Anwesenheitserfassungs-Terminal interagiert, können repräsentativ für eine bestimmte Absicht stehen, welche die intent engine sodann erkennt und eine entsprechende Absichtsinformation ausgibt. Dabei können auch Absichten einer Interaktion mit dem Anwesenheitserfassungs-Terminal existieren, welche Absichten keine eindeutige Identifizierung der Person erfordern. So kann es bei solchen Absichten ausreichend sein, die detektierte Person einer Personen-Gruppe zuzuordnen, die etwa grundsätzlich mit dem Anwesenheitserfassungs-Terminal interagieren kann bzw. darf.

Grundsätzlich kann das Anwesenheitserfassungs-Terminal eine identification engine aufweisen. Die identification engine kann auch Identifikationseinrichtung genannt werden. Sie stellt eine Einrichtung dar, um die Identität einer Person, die mit dem Anwesenheitserfassungs-Terminal in Interaktion tritt, festzustellen. Die identification engine kann durch eine Software im Anwesenheitserfassungs-Terminal bzw. im Rahmen der Steuereinheit realisiert sein. Über die identification engine wird eine Identifizierungsinformation ausgegeben. Dabei kann die Identifizierungsinformation die interagierende Person eindeutig repräsentieren oder sie einer Personen-Gruppe zuordnen.

Hierzu kann die identification engine die zuvor von der Sensoreinheit bereitgestellte detektierte Präsenzinformation nutzen. So kann etwa ein von der Sensoreinheit aufgenommenes Foto durch die identification engine analysiert und einer Person zugeordnet werden. Auch im Beispiel einer Erfassung durch die Sensoreinheit etwa mittels drahtloser Kommunikation mit einem mobilen Zutrittsmedium, wie etwa einer Zutrittskarte, einem Badge oder einem mobilen Endgerät der interagierenden Person, kann jene detektierte Präsenzinformation beispielsweise in Form der Kennung der Schlüsselkarte in der identification engine weiterverarbeitet und zur Identifizierung genutzt werden.

Alternativ oder zusätzlich kann die Identifizierung auch auf Grundlage zumindest einer weiteren personenbezogenen Information erfolgen. So ist denkbar, dass auch die identification engine über eigene Sensoren verfügt, oder aber etwa dass die Sensoreinheit zunächst eine detektierte Präsenzinformation bereitstellt, die lediglich grundsätzlich die Anwesenheit einer Person repräsentiert, und sodann von der Sensoreinheit eine weitere personenbezogene Information eingeholt wird, die der Identifizierung der Person dient.

Die weitere personenbezogene Information muss keine persönlichen Daten umfassen, sondern nur eine Eindeutigkeit der Person bzw. eindeutige Unterscheidbarkeit einer Person von anderen Personen ermöglichen.

Die Steuereinheit ist eingerichtet, das Anwesenheitserfassungs-Terminal wenigstens in einen dritten Betriebszustand zu versetzen, wobei das Anwesenheitserfassungs-Terminal in dem dritten Betriebszustand in einen energiesparenden Modus im Vergleich zu dem zweiten Betriebszustand versetzt ist.

Das Anwesenheitserfassungs-Terminal kann in einen dritten Betriebszustand versetzt werden, wobei das Anwesenheitserfassungs-Terminal in dem dritten Betriebszustand in einem energiesparenden Modus im Vergleich zu dem zweiten Betriebszustand betrieben wird.

Der dritte Betriebszustand kann als eine Art "deep sleep mode" ("Tiefschlafmodus") dienen, in dem alle Systeme aufs Minimum heruntergefahren sind, bis auf die für eine Erkennen, dass eine Interaktion gewünscht ist, notwendigen Systeme bzw. engines. Demnach kann das Terminal besonders energiesparend betrieben werden.

Nach einer Ausführungsform des Anwesenheitserfassungs-Terminals bzw. des computerimplementierten Verfahrens zum Betreiben eines Anwesenheitserfassungs-Terminals ist vorgeschlagen, dass die Umgebungszone in eine Mehrzahl an Unterzonen aufgeteilt ist. Vorzugsweise umfasst die Mehrzahl an Unterzonen zumindest folgende Unterzonen: eine Nahzone sowie eine Fernzone. Dabei ist die Nahzone näher an dem Anwesenheitserfassungs-Terminal angeordnet als die Fernzone. Eine gezielte Detektion von Personen, in welchem Abstand bzw. in welcher relativen Lage sie sich zum Terminal befinden ist somit vorteilhaft möglich.

Insbesondere ist die Steuereinheit dabei derart eingerichtet, dass das Anwesenheitserfassungs-Terminal lediglich in den ersten Betriebszustand versetzbar ist, wenn die Person in der Nahzone detektiert wird. Insbesondere kann der Schritt des Versetzens des Anwesenheitserfassungs-Terminals von dem zweiten Betriebszustand in den ersten Betriebszustand lediglich erfolgen, wenn die Person in der Nahzone detektiert wird. Auf diese Weise wird das Terminal besonders energiesparend betrieben, da zwar grundsätzlich detektierte jedoch lediglich an dem Terminal vorbeilaufende Personen, die aufgrund mangelnder Nähe zum Terminal wohl keine Interaktion wünschen, nicht dazu führen, dass das Terminal unnötigerweise in einen wachen und nicht energiesparenden Zustand versetzt wird.

Nach einer Ausführungsform des Anwesenheitserfassungs-Terminals ist vorgeschlagen, dass die Steuereinheit derart eingerichtet ist, dass das Anwesenheitserfassungs-Terminal automatisch in den zweiten Betriebszustand versetzt wird, wenn die Person in der Fernzone und gleichzeitig keine Person in der Nahzone detektiert wird.

Nach einer Ausführungsform des computerimplementierten Verfahrens zum Betreiben eines Anwesenheitserfassungs-Terminals ist vorgeschlagen, dass ein Versetzen des Anwesenheitserfassungs-Terminals automatisch in den zweiten Betriebszustand erfolgt, wenn die Person in der Fernzone und gleichzeitig keine Person in der Nahzone detektiert wird.

Das Terminal ist dadurch besonders energiesparend zu betreiben, da, sobald aufgrund der Distanz von Personen zum Terminal geschlossen werden kann, dass keine Interaktion mehr gewünscht ist, unmittelbar der energiesparende zweite Betriebszustand angesteuert wird.

Eine bzw. die Speicherverwaltungseinheit umfasst Arbeitszeit-Daten, wobei das Anwesenheitserfassungs-Terminal derart eingerichtet ist, dass zumindest eine der folgenden Bedingungen erfüllt ist:
- das Anwesenheitserfassungs-Terminal ist lediglich außerhalb einer regulären Arbeitszeit in den dritten Betriebszustand versetzbar, und/oder
- das Anwesenheitserfassungs-Terminal ist in einem vorgegebenen Zeitraum einer/der regulären Arbeitszeit, insbesondere zu Beginn und/oder zu Ende der regulären Arbeitszeit, in den ersten Betriebszustand versetzt und nicht in den zweiten Betriebszustand versetzbar.

Eine reguläre Arbeitszeit wird vorgegeben oder hinterlegt, wobei:
- das Versetzen des Anwesenheitserfassungs-Terminals in den dritten Betriebszustand lediglich außerhalb der regulären Arbeitszeit erfolgen kann, und/oder
- in einem vorgegebenen Zeitraum der regulären Arbeitszeit, insbesondere zu Beginn und/oder zu Ende der regulären Arbeitszeit, das Anwesenheitserfassungs-Terminal in den ersten Betriebszustand versetzt wird und das Versetzen des Anwesenheitserfassungs-Terminals in den zweiten Betriebszustand gesperrt wird.

Auf diese Weise ist das Terminal optimal an die Arbeitszeiten der Mitarbeiter angepasst. So kann der energiesparende Modus bzw. die energiesparenderen Modi etwa vorteilhaft gerade dann unterbunden werden, wenn viele Interaktionen erwartet sind.

Nach einer Ausführungsform des Anwesenheitserfassungs-Terminals ist wenigstens ein erster Prozessor sowie ein zweiter Prozessor vorgesehen, wobei der erste Prozessor zumindest zum Durchführen des Versetzens des Anwesenheitserfassungs-Terminals in den ersten Betriebszustand, sowie vorzugsweise weiterhin in den zweiten Betriebszustand, eingerichtet ist und wobei der zweite Prozessor zumindest zum Betreiben der wenigstens einen Sensoreinheit und/oder der intent engine eingerichtet ist.

Nach einer Ausführungsform des computerimplementierten Verfahrens zum Betreiben eines Anwesenheitserfassungs-Terminals ist vorgeschlagen, dass der Schritt des Versetzens des Anwesenheitserfassungs-Terminals von dem zweiten Betriebszustand in den ersten Betriebszustand, sowie vorzugsweise weiterhin der Schritt des Versetzens des Anwesenheitserfassungs-Terminals in den zweiten Betriebszustand, mittels eines ersten Prozessors durchgeführt wird, wobei der Schritt des Beobachtens einer Umgebungszone mit der Sensoreinheit und/oder der Schritt des Erfassens der Absicht der Interaktion der Person mit dem Anwesenheitserfassungs-Terminal durch die intent engine mittels eines zweiten Prozessors durchgeführt wird.

Dabei ist der zweite Prozessor vorzugsweise leistungsärmer als der erste Prozessor.

Vorteilhafter Weise kann für die Überwachung der Umgebungszone zuständige, zweite Prozessor, welcher aktiv sein muss, um überhaupt eventuell interagierende Personen zu detektieren, energiesparender ausgeführt sein als etwa der Prozessor, welcher erst bei Erkennen einer eine Interaktion wünschenden Person arbeitet, und zwar um die Betriebszustände bestimmungsgemäß zu wechseln.

Nach einer Ausführungsform des Anwesenheitserfassungs-Terminals ist vorgeschlagen, dass die Sensoreinheit wenigstens eine der folgenden Einheiten umfasst:
- wenigstens eine Kamera,
- wenigstens einen biometrischen Sensor,
- wenigstens einen Annäherungssensor, und/oder
- wenigstens eine mobile access engine, wobei die mobile access engine der Sensoreinheit so konfiguriert ist, dass, um die Person in der Umgebungszone zu detektieren, ein Kommunikationsaustausch zwischen der mobile access engine und einem mobilen Zutrittsmedium der Person stattfindet.

Nach einer Ausführungsform des computerimplementierten Verfahrens zum Betreiben eines Anwesenheitserfassungs-Terminals ist vorgeschlagen, dass die Sensoreinheit die Umgebungszone mittels wenigstens einer der folgenden Einheiten beobachtet:
- wenigstens eine Kamera,
- wenigstens einen biometrischen Sensor,
- wenigstens einen Annäherungssensor, und/oder
- wenigstens eine mobile access engine, wobei die mobile access engine der Sensoreinheit mit einem mobilen Zutrittsmedium der Person kommuniziert, um die Person in der Umgebungszone zu detektieren.

Die mobile access engine kann dabei als Software in dem Anwesenheitserfassungs-Terminal bzw. in der Sensoreinheit realisiert sein bzw. eine Software umfassen, über welche Software der Kommunikationsaustausch zwischen der Person und der Sensoreinheit ausgewertet und gegebenenfalls die detektierte Präsenzinformation erzeugt und ausgegeben werden kann. Eine kontaktlose Erkennung der Person durch die Sensoreinheit und somit Interaktion der Person mit dem Anwesenheitserfassungs-Terminal ist besonders vorteilhaft, da die Notwendigkeit eines nahen Herantretens der Person an das Anwesenheitserfassungs-Terminal entfällt.

Nach einer weiteren Ausführungsform kann das mobile Zutrittsmedium der Person als Zutrittskarte, Badge und/oder mobiles Endgerät ausgebildet sein. Auf diese Weise kann eine besonders einfache kontaktlose Kommunikation zwischen der Person und dem Anwesenheitserfassungs-Terminal ablaufen.

Weiterhin wird die Aufgabe durch ein Computerprogramm gelöst, welches Computerprogramm Befehle umfasst, die bei der Ausführung des Programms durch einen Prozessor eines Anwesenheitserfassungs-Terminals das Anwesenheitserfassungs-Terminal veranlassen, die Schritte des zuvor bzw. nachfolgend beschriebenen vorschlagsgemäßen Verfahrens auszuführen.

Weiterhin wird ein computerlesbares Medium vorgeschlagen, auf dem das zuvor genannte Computerprogramm gespeichert ist.

Weitere vorteilhafte und bevorzugte Ausgestaltungen ergeben sich aus der nachfolgenden Beschreibung mit Bezug auf die Figuren. In den lediglich Ausführungsbeispiele wiedergebenden Zeichnungen zeigt
- Figur 1: eine schematische Konfiguration eines Ausführungsbeispiels des vorschlagsgemäßen Anwesenheitserfassungs-Terminals;
- Figur 2: ein Flussdiagramm der Verfahrensschritte eines vorschlagsgemäßen computerimplementierten Verfahrens zum Betreiben eines Anwesenheitserfassungs-Terminals;
- Figur 3: eine schematische Konfiguration eines Ausführungsbeispiels einer identification engine des vorschlagsgemäßen Anwesenheitserfassungs-Terminals;
- Figur 4: eine schematische Draufsicht auf eine Anordnung eines vorschlagsgemäßen Anwesenheitserfassungs-Terminals in einem Flur; und
- Figur 5: eine schematische Konfiguration eines Ausführungsbeispiels einer Steuereinheit des vorschlagsgemäßen Anwesenheitserfassungs-Terminals.

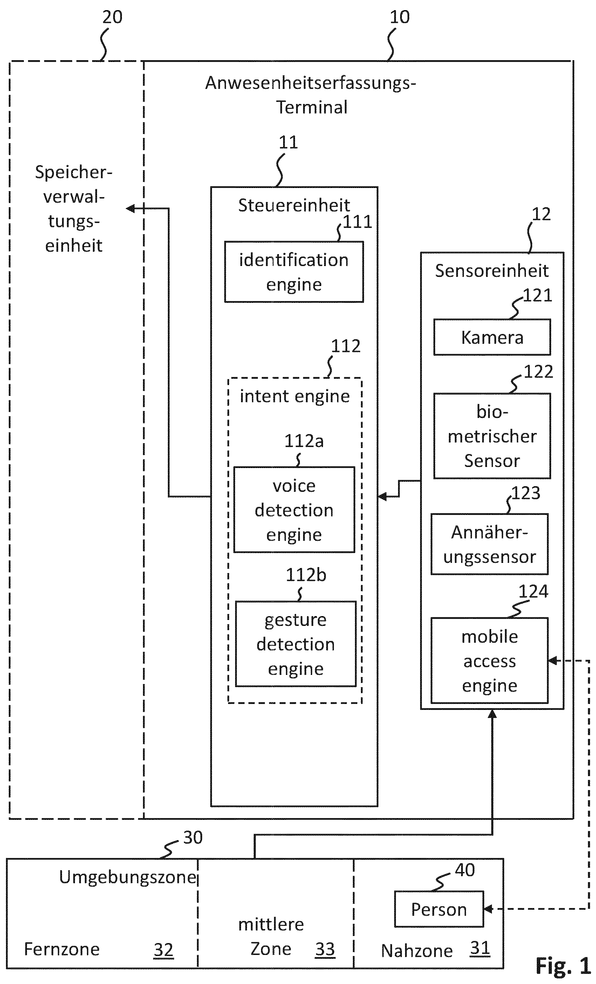

In Figur 1 ist schematisch die Konfiguration eines Ausführungsbeispiels eines vorschlagsgemäßen Anwesenheitserfassungs-Terminals 10 dargestellt. Bei dem Anwesenheitserfassungs-Terminal 10 handelt es sich um ein Zeiterfassungs-Terminal, welches dem Zweck dient, eine Zeiterfassung von Mitarbeitern/-innen beispielsweise am Eingang eines Unternehmensgebäudes zu ermöglichen. Konkret können an dem Zeiterfassungs-Terminal unterschiedliche Buchungsvorgänge durchgeführt und somit unterschiedliche Anwesenheitsinformationen gespeichert bzw. verarbeitet werden. So kann ein Mitarbeiter/eine Mitarbeiterin etwa seine/ihre Anwesenheit einbuchen oder ausbuchen, wenn dieser/diese etwa eine Pause macht oder sein/ihr Arbeitstag beendet ist.

Das Anwesenheitserfassungs-Terminal 10 ist demnach zur Erfassung einer Anwesenheitsinformation einer Person 40 auf Basis einer Aktion der Person 40 eingerichtet. Das Anwesenheitserfassungs-Terminal 10 umfasst, wie in Figur 1 dargestellt, zumindest eine Steuereinheit 11 sowie eine Sensoreinheit 12.

Ferner weist das dargestellte und insofern bevorzugte Anwesenheitserfassungs-Terminal 10 eine Speicherverwaltungseinheit 20 auf. Die Speicherverwaltungseinheit 20 kann dabei lokal vorgesehen und beispielsweise integrierter Bestandteil des Anwesenheitserfassungs-Terminals 10 sein oder die Speicherverwaltungseinheit 20 kann ebenso online in einer Cloud vorgesehen sein. Dies ist in Figur 1 über die gestrichelten Linien angedeutet. Sodann kann das Anwesenheitserfassungs-Terminal 10 etwa über die Steuereinheit 11 eine Onlineverbindung zu der Speicherverwaltungseinheit 20 herstellen und auf diese Weise mit der Speicherverwaltungseinheit 20 kommunizieren.

In der Speicherverwaltungseinheit 20 sind Stammsätze der Personen 40, welche Personen 40 mit dem Anwesenheitserfassungs-Terminal 10 interagieren, hinterlegt. In den Stammsätzen können personenspezifische Daten, beispielsweise mitarbeiterspezifische Informationen wie etwa die Arbeitszeiten, gespeichert sein. Die personenspezifischen Daten stehen dem Anwesenheitserfassungs-Terminal 10 bzw. dessen Steuereinheit 11 via Kommunikationsverbindung zwischen Speicherverwaltungseinheit 20 und Steuereinheit 11 zur Verfügung. Die Speicherverwaltungseinheit 20 verarbeitet und speichert zudem bestimmungsgemäß die Anwesenheitsinformation der Person 40, beispielsweise, dass diese nun zur Arbeit erschienen ist und ihre Arbeitszeiterfassung beginnen soll.

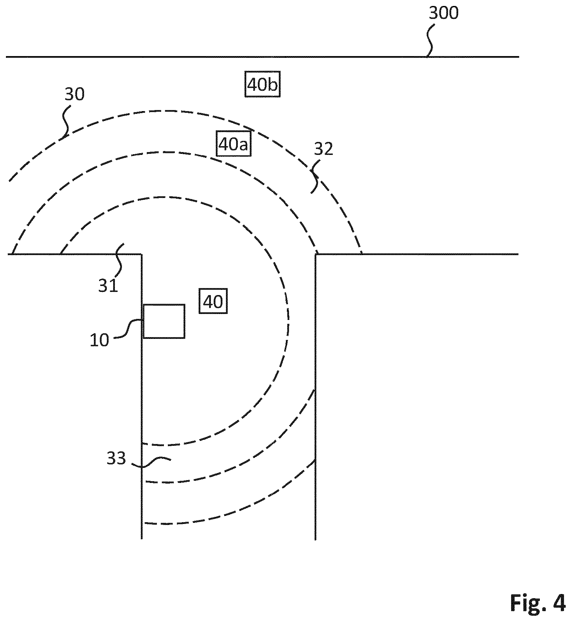

Die Sensoreinheit 12 des Anwesenheitserfassungs-Terminals 10 beobachtet eine Umgebungszone 30, welche Umgebungszone 30 das Anwesenheitserfassungs-Terminal 10 umgibt (vgl. ebenso Figur 4). Die Sensoreinheit 12 empfängt demnach Signale aus der Umgebungszone 30, wie durch den durchgezogenen von der Umgebungszone 30 zur Sensoreinheit 12 weisenden Pfeil in Figur 1 angedeutet.

Die Sensoreinheit 12 kann zur Beobachtung der Umgebungszone 30 unterschiedliche Einheiten aufweisen. Im Ausführungsbeispiel der Figur 1 weist die Sensoreinheit 12 die vier folgenden Einheiten auf: eine Kamera 121, einen biometrischen Sensor 122, einen Annäherungssensor 123 und eine mobile access engine 124. Dabei kann die Sensoreinheit 12 auch nur eine der Einheiten oder unterschiedliche Kombinationen der Einheiten aufweisen. Auch das Vorsehen zweier typgleicher Einheiten, zum Beispiel etwa zweier Kameras 121, ist möglich. Es können auch mehrere separat operierende Sensoreinheiten unterschiedlicher Konfigurationen vorgesehen sein.

Über die genannten Einheiten der Sensoreinheit 12 wird zunächst grundsätzlich die Anwesenheit der Person 40 in der Umgebungszone 30 erfasst. Hieraus resultierend kann die Sensoreinheit 12 eine detektierte Präsenzinformation der Person 40 ausgegeben. Konkret beobachtet beispielsweise die auf die Umgebungszone 30 gerichtete Kamera 121 den entsprechenden Raum, zum Beispiel einen das Anwesenheitserfassungs-Terminal 10 umgebenden Flur (mit Bezugszeichen 300 in Figur 4 gekennzeichnet), und erkennt mittels Bildverarbeitung, sobald die Person 40 die Umgebungszone 30 betritt.

Der biometrische Sensor 122 der Sensoreinheit 12 kann wiederum eine direkte Aktion der Person 40 an der Sensoreinheit 12 und somit am Anwesenheitserfassungs-Terminal 10 erfassen. Hierzu kann beispielsweise die Person 40 an dem biometrischen Sensor 122 einen Fingerabdruckscan durchführen oder ein sonstiges Signal auslösen.

Der Annäherungssensor 123 der Sensoreinheit 12 kann in verschiedenen Ausführungsformen ausgestaltet sein und die Anwesenheit der Person 40 in der Umgebungszone 30 kontaktlos erfassen.

Die mobile access engine 124 (mobile Zutrittseinrichtung) der Sensoreinheit 12 erfasst die Anwesenheit der Person 40 in der Umgebungszone 30 über einen Kommunikationsaustausch zwischen der mobile access engine 124 und der Person 40, konkret einem mobilen Zutrittsmedium der Person 40. Bei dem mobilen Zutrittsmedium der Person 40 kann es sich um eine Zutrittskarte handeln, wie etwa eine Schlüsselkarte. Es kann auch ein schlüsselloser Transponder (Badge) verwendet werden oder aber auch ein mobiles Endgerät der Person 40, welches mobile Endgerät über eine spezifische Anwendung zur Kommunikation mit der mobile access engine 124 verfügt.

Die mobile access engine 124 der Sensoreinheit 12 ist derart konfiguriert, dass ein in Figur 1 über den gestrichelten Doppelpfeil angedeuteter Kommunikationsaustausch zwischen der mobile access engine 124 und dem mobilen Zutrittsmedium der Person stattfindet, um die Anwesenheit der Person 40 zu erfassen und die detektierte Präsenzinformation ausgeben zu können.

Beispielsweise kann der schlüssellose Transponder (Badge) oder die Zutrittskarte der Person 40 auch mit RFID- oder auch mit UWB-Technologie (Ultra-Wideband) ausgestattet sein. Ein entsprechendes RFID- oder UWB-Modul der mobile access engine 124 detektiert sodann, wenn die Person 40 die Umgebungszone 30 betritt. Diese Funktion ist auch über eine Anwendung auf dem mobilen Endgerät der Person 40 realisierbar.

Die mobile access engine 124 kann als Software in dem Anwesenheitserfassungs-Terminal 10 bzw. in der Sensoreinheit 12 realisiert sein bzw. eine Software umfassen, über welche Software der Kommunikationsaustausch zwischen der Person 40 und der Sensoreinheit 12 ausgewertet und gegebenenfalls die detektierte Präsenzinformation erzeugt und ausgegeben wird.

Beobachtet die Sensoreinheit 12 etwa auf eine der beschriebenen Weisen, dass sich eine Person 40 in der Umgebungszone 30 befindet bzw. die Umgebungszone 30 betritt, so kann die Sensoreinheit 12 eine detektierte Präsenzinformation der Person 40 ausgeben.

Vorschlagsgemäß ist das Anwesenheitserfassungs-Terminal 10 etwa nicht gemäß Stand der Technik derart eingerichtet, dass automatisch ein Wechsel von einem energiesparenden zweiten Betriebszustand in einen höheren ersten Betriebszustand wechselt, sobald lediglich eine simple Anwesenheit der Person 40 in der Umgebungszone 30 über das Beobachten mittels Sensoreinheit 12 erfasst wurde. Vielmehr ist die Steuereinheit 12 derart eingerichtet, dass das Anwesenheitserfassungs-Terminal 10 in Abhängigkeit von einer Absichtsinformation von dem zweiten Betriebszustand in den ersten Betriebszustand wechselt.

Hierzu weist das Anwesenheitserfassungs-Terminal 10 ferner eine intent engine 112 (Absichtserkennungseinrichtung) auf. Die intent engine 112 kann Teil der Steuereinheit 11 sein und kann als Software in dem Anwesenheitserfassungs-Terminal 10 bzw. in der Steuereinheit 11 realisiert sein bzw. eine Software umfassen, über welche Software spezifische Informationen, die aus den Handlungen der Person 40 resultieren, ausgewertet werden können.

Die intent engine 112 erkennt die Absicht der Person 40, nämlich generell, dass bzw. sogar konkret, warum jene Person 40 mit dem Anwesenheitserfassungs-Terminal 10 in Interaktion treten möchte bzw. tritt. Dazu erfasst die intent engine 112 grundsätzlich die Abicht einer Interaktion der Person 40 und gibt eine Absichtsinformation aus, welche Absichtsinformation die Intention der Person 40 über die Interaktion repräsentiert. Es kann sich dabei lediglich um die Tatsache handeln, dass die Person 40 nun eine Interaktion durchführen möchte, oder aber auch bereits um die konkrete Interaktion an sich, sprich die konkrete Absicht der Interaktion.

Die konkrete Absicht der Interaktion kann dabei beispielsweise sein, dass sich die Person 40 einbuchen möchte, da ihre Arbeitszeit beginnt, oder dass sie sich aus dem System zur Zeiterfassung ausbuchen möchte. Weiterhin kann die konkrete Absicht der Person 40 auch darin bestehen, etwa eine in einem Stammsatz hinterlegte, spezifische Information abzurufen. So könnte beispielsweise die Person 40 ihre in einem gewissen vordefinierten Zeitraum abgeleistete Anwesenheitszeit bzw. Arbeitszeit abfragen wollen. Auch kann es möglich sein, über das Anwesenheitserfassungs-Terminal 10 in Erfahrung zu bringen, inwiefern noch Guthaben auf einer Zutrittskarte oder einer personenspezifischen Mitarbeiterkarte vorhanden ist, falls die Zutrittskarte bzw. die personenspezifische Mitarbeiterkarte (oder etwa ein Badge) auch zur Zahlung in einer Kantine oder dergleichen geeignet ist. Bevorzugt umfasst die Speicherverwaltungseinheit 20 den Stammsatz entsprechender personenspezifischer Daten.

Dabei kann die Absichtsinformation grundsätzlich mit der Sensoreinheit 12 detektiert werden, wobei der Absichtsinformation folgende Daten zugrunde liegen können:
- ein Bewegungsmuster der Person 40, konkret die Bewegungsrichtung der Person 40 in der Umgebungszone 30 und/oder eine Bewegungsgeschwindigkeit der Person 40, und/oder
- eine Signaleingabe durch die Person 40.

Dabei kann die Bewegungsrichtung und/oder die Bewegungsgeschwindigkeit über ein Kamera-Tracking und/oder per Ultra-Wideband Signal erfasst werden. Dies ist besonders vorteilhaft, da keine weitere eigene Aktion durch die Person 40 zur Verarbeitung bzw. Interpretation dieser Daten erforderlich ist.

Die Bewegungsrichtung und/oder -geschwindigkeit kann bereits der Differenzierung dienen, ob die sich in der Nähe befindende Person 40 eine Interaktion wünscht oder nicht. Auch kann bereits eine konkrete Absicht aus dem Bewegungsmuster geschlossen werden. So kann beispielsweise aus der Bewegungsrichtung der Person 40 von außerhalb des entsprechenden Gebäudes in Richtung Anwesenheitserfassungs-Terminal 10 geschlossen werden, dass die Person 40 gerne eine Einbuchung zum Arbeiten vornehmen möchte. Im umgekehrten Fall könnte aus der Bewegungsrichtung grundsätzlich in Richtung Gebäude- oder Etagenausgang geschlossen werden, dass die Person 40 eine Ausbuchung oder das Buchen einer Pause vornehmen möchte.

Es könnten in die Analyse der Bewegung der Person 40 und somit in die Interpretation der Absicht auch personenspezifische Informationen einfließen, die etwa in der Speicherverwaltungseinheit 20 hinterlegt sind. So kann dort hinterlegt sein, dass sich eine Person 40 gerade in einer Pause befindet oder grundsätzlich ausgeloggt ist. Sodann kann etwa aus einer grundsätzlich gewünschten Interaktion dieser Person 40 mit dem Anwesenheitserfassungs-Terminal 10 geschlossen werden, dass sich die Person einbuchen möchte.

In einer besonders vorteilhaften Ausgestaltung weist die Steuereinheit 11 bzw. weisen die engines eine KI (Künstliche Intelligenz) mit einer Machine Learning engine auf, um etwa die Bewegungsdaten zu analysieren. So kann die spezifische detektierte Präsenzinformation der Person 40 mittels Machine Learning analysiert werden und beispielsweise ein Abgleich eines erfassten Verhaltens der Person 40, wie etwa eines Bewegungsmusters, mit bekannten angelernten Verhalten bzw. Bewegungsmustern erfolgen. Dies kann einerseits einen Einfluss auf die Entscheidung, ob eine engine aktiviert werden soll oder nicht, nehmen, sowie andererseits auch in die nachfolgend beschriebene Erfassung einer Absicht der Interaktion der Person 40 einfließen.

Alternativ bzw. zusätzlich kann die Absichtsinformation der Interaktion der Person 40 auch über eine aktive Signaleingabe durch die Person 40 übermittelt werden. Dabei kann die Signaleingabe beispielsweise wie folgt erfolgen:
- die intent engine 112 empfängt ein von der Person 40 an einem mobilen Endgerät eingegebenes, die Absicht der Interaktion repräsentierendes Signal, und/oder
- die die intent engine 112 empfängt eine die Absicht der Interaktion repräsentierende Spracheingabe von der Person 40 oder erkennt eine die Absicht der Interaktion repräsentierende Gesteneingabe von der Person 40, und/oder
- die die intent engine 112 verarbeitet ein von der Person 40 an dem Anwesenheitserfassungs-Terminal 10, und zwar beispielsweise an einem Touchscreen-Display, eingegebenes und die Absicht der Interaktion repräsentierendes Signal.

Im erstgenannten Fall einer aktiven Eingabe der Person 40 an ihrem mobilen Endgerät ist vorteilhaft, dass die Absicht der Interkation durch die Person 40 eindeutig eingegeben und somit die Gefahr von Fehlinterpretation reduziert werden kann. Hierzu können in einer Anwendung auf dem mobilen Endgerät der Person 40 die für sie möglichen spezifischen Interaktionen mit dem Anwesenheitserfassungs-Terminal 10 angezeigt und dann durch die Person 40 ausgewählt werden. Durch eine entsprechende Kommunikation des mobilen Endgeräts mit dem Anwesenheitserfassungs-Terminal 10 bzw. konkret mit der intent engine 112 wird sodann die Absicht der Interaktion im Anwesenheitserfassungs-Terminal 10 erfasst und die Absichtsinformation bereitgestellt.

Im zuvor zweitgenannten Fall, dass die Signaleingabe über die Spracheingabe der Person 40 erfolgt oder aber auch, dass die Signaleingabe über eine Gesteneingabe der Person 40 erfolgt, ist eine entsprechende voice detection engine 112a (Spracherkennungseinrichtung) oder gesture detection engine 112b (Gestenerkennungseinrichtung) vorgesehen. Die voice detection engine 112a sowie die gesture detection engine 112b können als Software in der Steuereinheit 11 bzw. in der intent engine 112 realisiert sein bzw. eine Software umfassen, über welche Software das eingehende Sprachsignal der Person 40 bzw. die erfasste Geste bzw. Bewegung der Person 40 spezifische Informationen ausgewertet werden können.

Beispielsweise kann die Person 40 über eine Spracheingabe, wie etwa das Ausrufen des Wortes "Einbuchen", ihre Absicht der Interaktion mit dem Anwesenheitserfassungs-Terminal 10 kommunizieren. Wird jenes Sprachsignal von der voice detection engine 112a erkannt, weiß die intent engine 112 sodann, dass eine und auch konkret welche Interaktion erwünscht ist. Im Falle einer Geste kann beispielweise vorgesehen sein, dass die Person 40 eine bestimmte Bewegung, die etwa von der Sensoreinheit 12 erfasst wird, ausführen muss, sodass die gesture detection engine 112b diese dann als Einbuchungsabsicht oder Ausbuchungsabsicht erkennt und die entsprechende Absichtsinformation erkennt. Eine Geste kann auch sein, dass die Person 40 mit ihrem mobilen Zutrittsmedium eine vorbestimmte Bewegung ausführt, welche Bewegung sodann drahtlos am Anwesenheitserfassungs-Terminal 10 empfangen und durch die gesture detection engine 112b als entsprechende Absichtsinformation erkannt wird.

Im zuvor drittgenannten Fall ist es beispielsweise erforderlich, dass die Person 40 etwa am Touchscreen-Display des Anwesenheitserfassungs-Terminal 10 selbst ein Signal eingibt, um ihre Absicht auszudrücken. Dabei können von dem Anwesenheitserfassungs-Terminal 10 am Display auch nur mögliche, entsprechende Absichten vorgegeben sein. Die intent engine 112 verarbeitet jenes eingegebene Signal sodann als entsprechende Absichtsinformation.

Die Steuereinheit 11 des vorschlagsgemäßen Anwesenheitserfassungs-Terminals 10 ist derart eingerichtet, dass das Anwesenheitserfassungs-Terminal 10 in Abhängigkeit von der Absichtsinformation von dem zweiten Betriebszustand in den ersten Betriebszustand wechselt. Konkret wechselt das das Anwesenheitserfassungs-Terminal 10 nur in den weniger energiesparenden, betriebsbereiten zweiten Betriebszustand, wenn klar ist, dass eine Interaktion gewünscht ist.

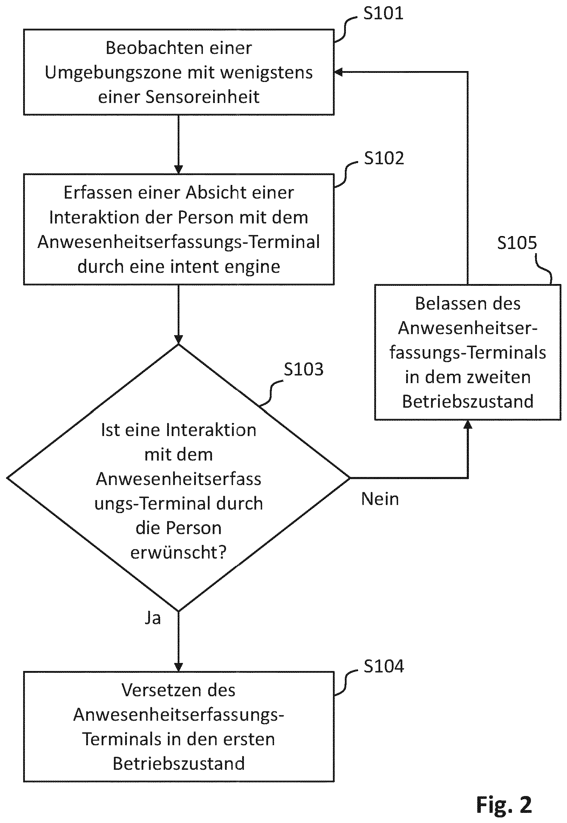

Das entsprechende vorschlagsgemäße computerimplementierte Verfahren zum Betreiben des Anwesenheitserfassungs-Terminals 10 zur Erfassung einer Anwesenheitsinformation einer Person 40 auf Basis einer Aktion der Person 40 ist in Figur 2 mit den folgenden Schritten dargestellt:
- Im Rahmen des Verfahrensschritts S101 wird die Umgebungszone 30 mit der Sensoreinheit 12 beobachtet;
- während Verfahrensschritt S102 wird die Absicht der Interaktion der Person 40 mit dem Anwesenheitserfassungs-Terminal 10 durch die intent engine 112 erfasst und die Absichtsinformation generiert;
- sodann wird in Abhängigkeit von der Absichtsinformation in dem anschließenden Verfahrensschritt S103 das Anwesenheitserfassungs-Terminal 10 von dem zweiten Betriebszustand in den ersten Betriebszustand versetzt.

Konkret wird, falls eine Interaktion erwünscht sein sollte, das Anwesenheitserfassungs-Terminal 10 in den ersten Betriebszustand versetzt (Schritt S104) bzw., falls keine Interaktion erwünscht sein sollte, das Anwesenheitserfassungs-Terminal 10 in dem zweiten Betriebszustand belassen (Schritt S105) und die Umgebungszone 30 weiter beobachtet (S101) bzw. Absichten von Personen 40 weiter erfasst (S102).

Bei dem ersten Betriebszustand handelt es sich um den wacheren Betriebszustand, in dem das Anwesenheitserfassungs-Terminal 10 alle bestimmungsgemäßen Operationen durchführen kann. So kann etwa vorgesehen sein, dass in dem ersten Betriebszustand erst eine Verbindung zur Speicherverwaltungseinheit 20 besteht, etwa in Form einer Onlineverbindung, oder etwa, dass erst im ersten Betriebszustand die Speicherverwaltungseinheit 20 eingeschaltet wird. Auch kann vorgesehen sein, dass ein Display am Anwesenheitserfassungs-Terminal 10 erst eingeschaltet wird, wenn das Anwesenheitserfassungs-Terminal 10 in den ersten Betriebszustand versetzt ist. Insofern kann der erste Betriebszustand auch als "wake up mode" bezeichnet werden.

Der zweite Betriebszustand stellt wiederum einen "ECO mode" dar, also einen Energiesparmodus. In jenem Zustand können beispielsweise das zuvor erwähnte Display oder auch die Speicherverwaltungseinheit 20 bzw. auch andere nicht unbedingt notwendige Einrichtungen (engines) ausgeschaltet bzw. deaktiviert sein. Auf diese Weise lässt sich das Anwesenheitserfassungs-Terminal 10 energiesparender betreiben.

Es ist besonders vorteilhaft, dass das vorschlagsgemäße Anwesenheitserfassungs-Terminal 10 auch einen dritten Betriebszustand kennt, in den es versetzbar ist, welcher dritte Betriebszustand auch als "deep sleep mode" bezeichnet werden kann. Der dritte Betriebszustand ("deep sleep mode") ist noch energiesparender als der zweite Betriebszustand ("ECO mode"). Insofern sind im dritten Betriebszustand alle nicht unbedingt notwendigen Einrichtungen abgeschaltet.

Besonders vorteilhaft ist das Anwesenheitserfassungs-Terminal 10 dann derart eingerichtet, dass es lediglich in den dritten Betriebszustand versetzbar ist, wenn keine regulären Arbeitszeiten vorliegen und demnach keine Interaktionen zu erwarten sind.

Weiterhin ist vorteilhaft vorgesehen, dass das Anwesenheitserfassungs-Terminal 10 zwei unterschiedliche Prozessoren aufweist. Dabei kann der erste Prozessor ausschließlich zum Durchführen der Wechsel der Betriebszustände verantwortlich sein. Demnach kann der erste Prozessor das System bzw. das Anwesenheitserfassungs-Terminal 10 gegebenenfalls schrittweise aufwecken. Sodann kann der zweite Prozessor für die Überwachung selbst bzw. die weitere Interaktion und die Buchungen von Vorgängen verantwortlich sein. Der zweite Prozessor ist demnach wenigstens zum Betreiben der Sensoreinheit 12 sowie der intent engine 1112 eingerichtet. Besonders vorteilhaft ist der zweite Prozessor leistungsärmer bzw. leistungssparender als der erste Prozessor.

Der Wechsel vom ersten Betriebszustand wiederum in einen der anderen energiesparenderen Betriebszustände kann beispielsweise automatisch erfolgen, wenn die Interaktion der Person 40 mit dem Anwesenheitserfassungs-Terminal 10 abgeschlossen ist und/oder wenn sich die Person wieder aus der Umgebungszone 30 oder einer vorgegebenen Unterzone entfernt hat, und/oder wenn eine vorgegebene Zeitspanne verstrichen ist.

Ferner kann, wie in Figur 1 dargestellt, muss aber nicht zwingend das Anwesenheitserfassungs-Terminal 10 eine identification engine 111 (Identifikationseinrichtung) aufweisen. Diese, beispielsweise in die Steuereinheit 11 integrierte, identification engine 111 kann auf der Grundlager jener detektierten Präsenzinformation der Person 40 die Person 40 identifizieren. Die identification engine 111 kann dabei zur Ausgabe einer Identifizierungsinformation eingerichtet sein, welche Identifizierungsinformation für eine jeweilige Person 40 eindeutig repräsentativ sein oder jedenfalls jene Person 40 eindeutig einer vorgegebenen Personengruppe zuordnen kann. So kann es zum Beispiel für manche Interaktionen auch nicht unbedingt notwendig sein, die konkrete Person 40 eindeutig zu identifizieren, sondern ausreichend sein, sie lediglich einer Personen-Gruppe zuzuweisen. Beispielsweise kann erkannt werden, dass die Person 40 grundsätzlich einer "erlaubten" Personen-Gruppe zugehört, sodass die Person 40 eben eine Interaktion durchführen kann, solange die Interaktion nicht eine tiefergehende eindeutige Identifizierung erfordert.

Die identification engine 111 kann als Software in dem Anwesenheitserfassungs-Terminal 10 bzw. in der Steuereinheit 11 realisiert sein bzw. eine Software umfassen, über welche Software detektierte Präsenzinformation der Person 40 oder aber auch weitere personenbezogene Informationen ausgewertet werden können.

Wurde von der Sensoreinheit 12 also grundsätzlich eine Person 40 erkannt, so kann diese bei Bedarf mittels der identification engine 111 konkret identifiziert werden. Die angesprochene Identifizierung der Person 40 kann etwa auf Basis der detektierten Präsenzinformation der Person 40 und/oder auf Basis zumindest einer weiteren personenbezogenen Information erfolgen. Die eine bzw. die weitere/weiteren personenbezogene/personenbezogenen Information/Informationen, die zur Identifizierung herangezogen werden können, müssen dabei keine persönlichen Daten umfassen, sondern nur eine Eindeutigkeit der Person 40 bzw. eine eindeutige Unterscheidbarkeit einer Person von anderen Personen ermöglichen.

Bei der detektierten Präsenzinformation kann es sich im Beispiel einer Kamera 121 etwa um ein Foto der Person 40 handeln. Es könnte jedoch auch lediglich das Signal, dass die Kamera 121 eine Person erfasst hat, als einfache detektierte Präsenzinformation der Steuereinheit 11 bzw. der identification engine 111 zur Verfügung gestellt werden. Das konkrete Foto der Person 40 könnte als weitere personenbezogene Information zur Verfügung gestellt werden, auf deren Grundlage sodann die konkrete Identifizierung stattfindet.

Die identification engine 111 ist darüber hinaus zur Verifizierung der Person 40 und zur Ausgabe einer Verifizierungsinformation eingerichtet. Unter Verifizierung ist hier ein Detailgrad mehr gemeint als eine simple Identifizierung. So kann über die beschriebene Identifizierung die Person 40 an sich erkannt bzw. einer Personen-Gruppe zugordnet werden. Unter Verifizierung ist jedoch weitergehende gemeint, dass auch überprüft wird, ob die identifizierte Person 40 etwa eine reale Person ist oder ob nicht eine Täuschung vorliegt, da beispielsweise der Versuch einer bewussten Falschbuchung unternommen wird. Dabei erfolgt die Verifizierung der Person 40 auf Basis der detektierten Präsenzinformation der Person 40 und/oder auf Basis der weiteren personenbezogenen Information.

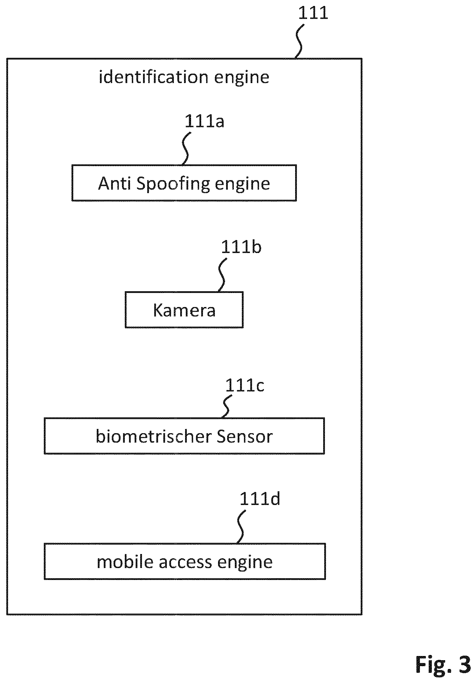

Die identification engine 111 kann hierzu, wie im Ausführungsbeispiel der Figur 3, welches eine identification engine 111 detailliert darstellt, ersichtlich, eine Anti-Spoofing engine 111a umfassen. Über die Anti-Spoofing engine 111a, welche als Software in der identification engine 111 realisiert sein bzw. eine Software umfassen kann, kann zwischen realen Personen und lediglich vor die Kamera 121 gehaltenen Fotos einer Person unterschieden werden. Eine solche Anti-Spoofing engine 111a ist besonders vorteilhaft, wenn Kameras 121 als Sensoreinheiten 12 zum Einsatz kommen, um eine bewusst falsche Buchung am Anwesenheitserfassungs-Terminal 10 zu unterbinden.

Die identification engine 111 bekommt also entweder detektierte Präsenzinformationen oder weitere personenbezogene Informationen zur Auswertung und Identifizierung der Person 40 bereitgestellt oder aber die identification engine 111 kann entsprechende Informationen auch selbst detektieren. Hierzu kann, wie in dem Ausführungsbeispiel der identification engine 111 in Figur 3 dargestellt, die identification engine 111 ebenso wenigstens eine der folgenden Einheiten umfassen: wenigstens eine Kamera 111b, wenigstens einen biometrischen Sensor 111c, und/oder wenigstens eine mobile access engine 111d. Die Funktionalitäten der einzelnen Einheiten wurde zuvor bereits im Zusammenhang mit der Sensoreinheit 12 beschrieben, worauf verwiesen werden kann. Explizit sei erwähnt, dass die mobile access engine 111d der identification engine 111 so konfiguriert ist, dass, zur Identifizierung der Person 40, ein Kommunikationsaustausch zwischen der mobile access engine 111d und einem mobilen Zutrittsmedium (Badge, Zutrittskarte, mobiles Endgerät bzw. Anwendung auf mobilem Endgerät oder dergleichen) der Person 40 stattfindet.

Grundsätzlich kann zur Reduzierung einzelner Einheiten auch vorgesehen sein, dass die identification engine 111 direkt auf die Einheiten der Sensoreinheit 12 (Kamera 121, biometrischer Sensor 122, mobile access engine 124) zugreifen kann bzw. entsprechende Informationen von diesen zur Verfügung gestellt bekommt.

Weiterhin kann auch vorgesehen sein, dass die Sensoreinheit 12 und die Steuereinheit 11 bzw. die identification engine 111 integraler Bestandteil des Anwesenheitserfassungs-Terminals 10 und beispielsweise mitsamt den entsprechenden Sensoren gemeinsam in einem Gehäuse des Anwesenheitserfassungs-Terminals 10 verbaut sind. Es kann jedoch auch vorteilhaft sein, die Sensoreinheit 12 oder einen Teil der Sensoreinheit 12, beispielsweise die Kamera 121, außerhalb des Anwesenheitserfassungs-Terminals 10 an einem günstigen Punkt der Umgebungszone 30 anzuordnen, während etwa die identification engine 111 beispielsweise mit ihrer Kamera 111b integraler Bestandteil des Anwesenheitserfassungs-Terminals 10 ist. Sodann kann über die Sensoreinheit 12 vorteilhaft zunächst das grundsätzliche Detektieren einer Person bereits weiter entfernt vom Anwesenheitserfassungs-Terminal 10 erfolgen, während die Identifizierung der Person 40 mittels der identification engine 111 auf Grundlage der an der Kamera 111b generierten Informationen am Anwesenheitserfassungs-Terminal 10 selbst erfolgt.

Die Umgebungszone 30 wiederum kann, wie Figur 1 und an einem Bespiel einer Anordnung eines Anwesenheitserfassungs-Terminals 10 in einem Flur 300 ebenso Figur 4 zu entnehmen ist, in eine Mehrzahl an Unterzonen aufgeteilt sein. So ist eine Nahzone 31, die dem Anwesenheitserfassungs-Terminal 10 am nächsten angeordnet ist, sowie eine Fernzone 32, die am weitesten vom Anwesenheitserfassungs-Terminal 10 entfernt angeordnet ist, vorgesehen. Zwischen der Nahzone 31 und der Fernzone 32 befindet sich noch eine mittlere Zone 33.

Vorteilhaft erkennt die Sensoreinheit 12 konkret, in welcher Unterzone sich eine Person 40 befindet und gibt gegebenenfalls eine entsprechende spezifische detektierte Präsenzinformation der Person 40 aus, und zwar in Abhängigkeit von einem oder mehreren zonenspezifischen Signal/Signalen, das/die von der Person 40 in der genannten Unterzonen sich die Person 40 ausgeht/ausgehen.

Dabei muss das zonenspezifische Signal nicht aktiv durch die Person 40 ausgelöst werden. Vielmehr wird das zonenspezifische Signal durch die Person 40 lediglich hervorgerufen, etwa durch die Anwesenheit bzw. durch die Art einer Fortbewegung der Person 40 in der jeweiligen Unterzone. So kann beispielsweise über ein Kamera-Tracking eine Person 40 in der Unterzone bzw. deren Bewegung verfolgt werden und daraus ein zonenspezifisches Signal generiert werden. Das zonenspezifische Signal kann also durch die einfache Anwesenheit bzw. die Bewegung der Person 40 in der Unterzone bewirkt bzw. hervorgerufen werden.

Dabei können folgende Umstände in das zonenspezifische Signal und somit die spezifische detektierte Präsenzinformation der Person 40 einfließen:
- In welcher Unterzone befindet sich die Person 40, und/oder
- in welche Unterzone begibt sich die Person 40 begibt, und/oder
- wie sieht ein Bewegungsmuster der Person 40 aus?

Das Bewegungsmuster der Person 40 kann sich darauf beziehen, wie eine Bewegungsrichtung der Person 40 und/oder eine Bewegungsgeschwindigkeit der Person 40 ist. Die Bewegungsrichtung kann dabei über einen Richtungsvektor über die Zeit repräsentiert sein. Hierüber kann das Bewegungsmuster der Person 40 innerhalb einer Umgebungszone bzw. Unterzone erfasst und etwa der Analyse der Absicht der Interaktion zugrunde gelegt werden. Mit der Information, in welche Unterzone sich eine Person 40 begibt, wird ein Zonenwechsel einer Person 40 erfassbar und kann der Analyse zugrunde gelegt werden.

Das technische Mittel zur Erkennung der Position, also der Anwesenheit, bzw. der Bewegung der Person 40 etwa in einer Unterzone kann vorteilhaft die Sensoreinheit 12 sein. Die Sensoreinheit 12 umfasst dabei vorteilhaft eine Kamera 121.

Auf diese Weise kann beispielsweise das erwähnte Wecken einzelner engines bzw. das Versetzen des Anwesenheitserfassungs-Terminals 10 in verschiedene Betriebszustände in Abhängigkeit davon erfolgen, in welcher Unterzone sich die Person 40 befindet bzw. auf welche Weise sich die Person 40 etwa in einer Unterzone fortbewegt. Betritt die Person 40 beispielsweise lediglich die Fernzone 32 und wird dort grundsätzlich detektiert, nähert sich jene Person 40 jedoch nicht weiter dem Anwesenheitserfassungs-Terminal 10 an und betritt demnach nicht die mittlere Zone 33 oder die Nahzone 31, so kann daraus geschlossen werden, dass die Person 40 gar nicht in Interaktion mit dem Anwesenheitserfassungs-Terminal 10 treten möchte. Dementsprechend kann die Steuereinheit 11 vorteilhaft derart eingerichtet sein, dass das Anwesenheitserfassungs-Terminal 10 lediglich in den ersten Betriebszustand versetzbar ist, wenn die Person 40 in der Nahzone 31 oder zumindest in der mittleren Zone 33 detektiert wird.

Das in Figur 4 wiedergegebene Beispiel eines Flurs 300, der eine T-Gabelung aufweist, veranschaulicht die unterschiedlichen Unterzonen, dargestellt über gestrichelte Teilkreise, die das Anwesenheitserfassungs-Terminal 10 in unterschiedlichen Abständen umgeben. Die Person 40, die sich in der Nahzone 31 befindet, interagiert mit dem Anwesenheitserfassungs-Terminal 10. Die Person 40a wiederum befindet sich in der Fernzone 32, in welcher zwar eine grundsätzliche Detektion der Person 40a mittels der Sensoreinheit 12 des Anwesenheitserfassungs-Terminal 10 stattfindet, welche Detektion jedoch noch nicht dazu führen würde, dass das Anwesenheitserfassungs-Terminal 10 arbeiten müsste. Erst wenn die Person 40a auch die mittlere Zone 33 bzw. je nach gewünschter Konfiguration die Nahzone 31 betritt, wird eine entsprechende Absicht über die Interaktion der Person 40 erkannt, sodass ein Wechsel in den ersten Betriebszustand stattfindet. Die dritte Person 40b wiederum befindet sich außerhalb der gesamten Umgebungszone 30, sodass in Bezug auf die Person 40b gar keine Detektion der Person stattfindet. Das Anwesenheitserfassungs-Terminal 10 detektiert die Person 40b in der dargestellten Konfiguration nicht, da klar ist, dass keine Interaktion mit dem Anwesenheitserfassungs-Terminal 10 durch die Person 40b gewünscht ist.

Sowohl die beschriebene Absichtsinformation als auch die zuvor geschilderte Identifizierungsinformation können wichtige Buchungsinformationen darstellen, die das Anwesenheitserfassungs-Terminal 10 verarbeitet. Konkret empfängt die Steuereinheit 11 jene Identifizierungsinformation von der identification engine 111 sowie die Absichtsinformation von der intent engine 112 und verarbeitet diese. Dabei findet ein Abgleich statt, ob jene empfangenen Buchungsinformationen mit in der Speicherverwaltungseinheit 20 hinterlegten, vorgegebenen Buchungsinformationen übereinstimmen. So ist über die Identifizierungsinformation die konkret mit dem Anwesenheitserfassungs-Terminal 10 interagierende Person 40 bekannt, sowie über die Absichtsinformation der gewünschte Buchungsvorgang der Person 40. Sollte jene Absicht möglich sein, wie etwa in dem Beispiel, dass sich die Person 40 zur Arbeit einbuchen möchte und in der Speicherverwaltungseinheit 20 hinterlegt ist, dass die Person 40 gerade ausgeloggt und nicht zur Arbeit eingebucht ist, dann kann der entsprechende Buchungsvorgang auf einfache Weise automatisch verarbeitet und gespeichert werden. So wird die zuvor in der Speicherverwaltungseinheit 20 gespeicherte Anwesenheitsinformation der Person 40 lediglich aufgrund der durch die identification engine 111 bereitgestellten Identifizierungsinformation und der durch die intent engine 112 empfangene Absichtsinformation automatisch überschrieben und neu gespeichert.

Das vorschlagsgemäße Anwesenheitserfassungs-Terminal 10 ermöglicht auf diese Weise eine besonders einfache Bedienung und Interaktion zwischen Personen 40 und dem Anwesenheitserfassungs-Terminal 10. So können sowohl die grundsätzliche Anwesenheit der Person 40, welche eine Interaktion wünscht, als auch die konkrete Interaktion selbst, also die Absicht der Interaktion der Person 40, kontaktlos erfasst werden. Die Buchungsvorgänge an dem Anwesenheitserfassungs-Terminal 10 sind stark vereinfacht.

Die im Rahmen des vorschlagsgemäßen und dargestellten Anwesenheitserfassungs-Terminal 10 beschriebenen Merkmale und Vorteile sind entsprechend auf das vorschlagsgemäße computerimplementierte Verfahren zum Betreiben eines Anwesenheitserfassungs-Terminals übertragbar. Konkret ist das computerimplementierte Verfahren zum Betreiben jenes vorschlagsgemäßen und beschriebenen Anwesenheitserfassungs-Terminals 10 eingerichtet. Das vorschlagsgemäße und hier beschriebene Anwesenheitserfassungs-Terminal 10 wiederum ist zur Ausführung des vorschlagsgemäßen computerimplementierten Verfahrens zum Betreiben eines Anwesenheitserfassungs-Terminals eingerichtet. Insofern wurden zuvor und werden nachfolgend die das Anwesenheitserfassungs-Terminal 10 bzw. das Verfahren zum Betreiben des Anwesenheitserfassungs-Terminals 10 charakterisierende Merkmale und spezifische Vorteile regelmäßig nur einfach beschrieben.

Vorschlagsgemäß kann in das Anwesenheitserfassungs-Terminal 10 auch eine weitere Kontrollebene integriert sein. Sodann wird der Person 40 ein Feedback, also eine Rückmeldung, über die erfolgte Buchung, also über die vorgenommene Abänderung der Anwesenheitsinformation in der Speicherverwaltungseinheit 20 oder eben auch darüber, dass keine Änderung vorgenommen wurde, gegeben.

Vorteilhaft ist die Speicherverwaltungseinheit 20 dann derart eingerichtet, dass, wenn die Anwesenheitsinformation gespeichert worden ist, die Speicherverwaltungseinheit 20 in den Daten der Person 40 in ihrem Stammsatz der personenspezifischen Daten überprüft, ob ein Feedback zu der Interaktion der Person 40 mit dem Anwesenheitserfassungs-Terminal 10 gewünscht ist.

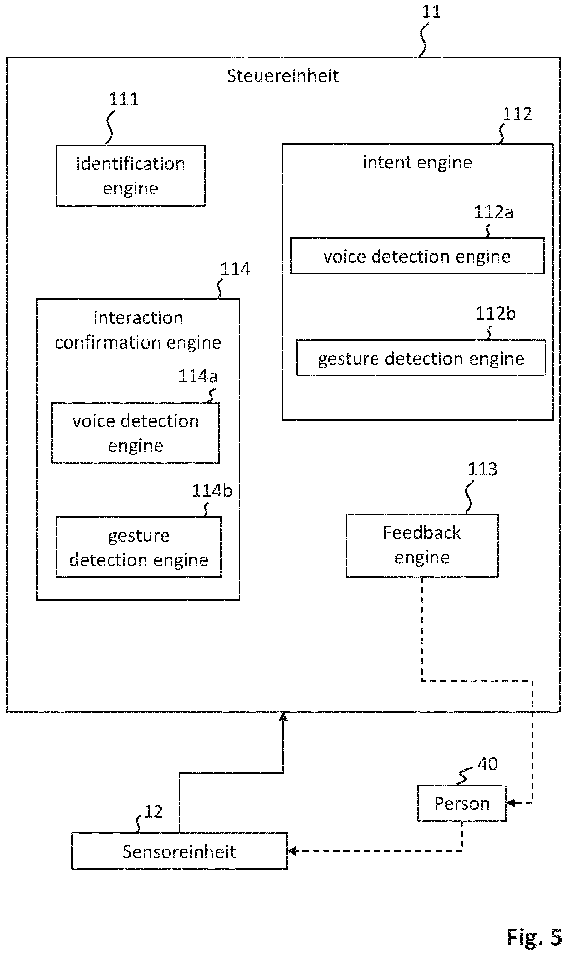

Das Anwesenheitserfassungs-Terminal 10 bzw. die Steuereinheit 11 kann dazu, wie etwa in Figur 5 dargestellt, zusätzlich zur identification engine 111 sowie intent engine 112 auch eine Feedback engine 113 (Rückmeldungseinrichtung) aufweisen. Die Feedback engine 113 ist derart eingerichtet, dass, wenn die Interaktion der Person 40 mit dem Anwesenheitserfassungs-Terminal 10 erfolgt ist, eine Feedback-Information ausgegeben werden kann. Die Feedback-Information kann dabei am Anwesenheitserfassungs-Terminal 10, beispielsweise am Display dieses bzw. über Lautsprecher, oder aber auch an dem mobilen Zutrittsmedium der Person 40 ausgegeben werden. Dabei kann die Feedback-Information als Sprachsignal und/oder als grafisches Signal und/oder als haptisches Signal, wie beispielsweise einem Vibrationssignal am mobilen Zutrittsmedium, ausgegeben werden.

Die Feedback-Information kann beispielsweise auch eine Aufforderung oder eine Benutzerinformationen umfassen, mit der ein Unterhalter des Anwesenheitserfassungs-Terminals (z.B. Arbeitgeber) die Person 40, die als Benutzer mit dem Anwesenheitserfassungs-Terminal 10 interagiert, zu etwas auffordert oder diese über etwas informiert. Eine Aufforderung an die Person 40 könnte etwa lauten: "bei Personalabteilung melden", "bitte Überstunden reduzieren" etc.. Eine simple Information könnte etwa über den aktuellen Zeitkontostand erfolgen.

Es kann vorteilhaft vorgesehen sein, dass sensible personenspezifische Informationen nur auf dem mobilen Endgerät der Person 40 ausgeben werden, während allgemeine und nicht sensible Informationen nur auf dem Anwesenheitserfassungs-Terminal 10 oder auf dem Anwesenheitserfassungs-Terminal 10 sowie dem mobilen Endgerät ausgeben werden.

Die Feedback engine 113 kann zumindest teilweise als Software in dem Anwesenheitserfassungs-Terminal 10 bzw. in der Steuereinheit 11 realisiert sein, über welche Software zum einen mithilfe der Speicherverwaltungseinheit 20 überprüft werden kann, ob die Person 40 ein Feedback wünscht und, zum anderen, das entsprechende Feedback veranlasst werden kann. Dementsprechend kann die Feedback engine 113 bzw. die Steuereinheit 11 in Kommunikationsverbindung mit einer Sprachausgabeeinheit stehen, falls etwa ein Sprachsignal als Feedback-Information gewünscht ist.

Besonders vorteilhaft wird im Stammsatz der personenspezifischen Daten zuvor kontrolliert, ob die konkrete Person 40, die die Interaktion durchführt und zuvor identifiziert wurde, überhaupt ein Feedback wünscht, bzw. falls ja, in welcher Form das Feedback gewünscht ist. Die Feedback engine 113 kann demnach derart eingerichtet sein, dass eine personenabhängige Feedback-Information ausgegeben werden kann. So kann etwa ein Sprachsignal in der jeweiligen Sprache der Person 40 ausgegeben werden. Ferner könnte beispielsweise bei einer Person 40 mit einer Hörbehinderung vorgesehen sein, dass diese Person 40 ein anderes Signal als Feedback-Information, etwa das angesprochene grafische oder haptische Signal erhält.

Um die Sicherheit einer korrekten Interaktion zwischen der Person 40 und dem Anwesenheitserfassungs-Terminal 10 zu erhöhen, ist in dem Ausführungsbeispiel der Figur 5 ferner eine interaction confirmation engine 114 (Interaktionsbestätigungseinrichtung) in dem Anwesenheitserfassungs-Terminal 10 bzw. der Steuereinheit 11 vorgesehen.

Die interaction confirmation engine 114 kann eine klarstellende Absichtsinformation empfangen. Die klarstellende Absichtsinformation ist dafür gedacht, die eigentlich bereits kommunizierte und empfangene Absicht der Interaktion der Person 40 mit dem Anwesenheitserfassungs-Terminal 10 zu verifizieren oder falsifizieren. Dabei ist vorteilhaft, wenn jene klarstellende Absichtsinformation eine weitere Buchungsinformation für die Steuereinheit 11 darstellt. Von dieser weiteren Buchungsinformation wird zusätzlich zu der Identifizierungsinformation sowie Absichtsinformation dann abhängig gemacht, ob die Buchung in der Speicherverwaltungseinheit 20 durchgeführt werden soll oder nicht.

Hierzu kann die interaction confirmation engine 114 zumindest teilweise als Software in dem Anwesenheitserfassungs-Terminal 10 bzw. in der Steuereinheit 11 realisiert sein, über welche Software entsprechende Signale bzw. Handlungen der Person 40 zur Bestätigung bzw. Verneinung der zuvor erfassten Absicht ausgewertet werden können.

Die interaction confirmation engine 114 kann als voice detection engine 114a (Spracherkennungseinrichtung) zur Erfassung einer Spracheingabe durch die Person 40 und/oder als gesture detection engine 114b (Gestenerkennungseinrichtung) zur Erfassung einer Gesteneingabe durch die Person 40 ausgebildet sein. Hierzu kann auf die Beschreibung der voice detection engine 112a bzw. gesture detection engine 112b zuvor verwiesen werden.

Konkret kann eine klarstellende Absichtsinformation etwa drin bestehen, dass die Person 40 über ein Sprachsignal (etwa ein ausgesprochenes "ja") bestätigt, dass sie die erfasste Interaktion wünscht und diese ausgeführt werden soll. Auch kontaktgebundene klarstellende Absichtsinformationen sind denkbar, indem die Person 40 etwa eine Eingabe am Anwesenheitserfassungs-Terminal 10 oder auf ihrem mobilen Zutrittsmedium vornimmt. Weiterhin sind jedoch auch sprachsowie kontaktlose Bestätigungen durch die Person 40 denkbar, indem die Person 40 etwa eine bestimmte Geste, beispielsweise auch mit ihrem mobilen Zutrittsmedium, ausführt. Eine spezifische Bewegung des mobilen Zutrittsmediums kann etwa über RFID- oder UWB-Technik als klarstellende Absichtsinformation von der interaction confirmation engine 114 erkannt werden.

Vorteilhaft ist die intent engine 112 ferner dazu eingerichtet, der empfangenen Absichtsinformation eine Entfernungsinformation zuzuordnen. Hierüber kann erkannt werden, aus welcher Entfernung das von der Person 40 eingegebene bzw. veranlasste Signal kommt. Ein Beispiel ist, dass die Absichtsinformation über ein Sprachsignal durch die Person 40 mitgeteilt wird und, beispielsweise über die Lautstärke des Signals, durch die interaction detection engine 112 erkannt wird, wie weit die Person 40 entfernt ist. Dann kann der Buchungsvorgang davon abhängig gemacht werden, dass die Entfernungsinformation einem vorgegebenen Wertebereich entspricht. Also kann eine Buchung verhindert werden, wenn die Person 40 noch zu weit vom Anwesenheitserfassungs-Terminal 10 entfernt ist. Zum Buchungsvorgang und dem dafür erforderlichen Abgleich der detektierten bzw. empfangenen Informationen mit hinterlegten Informationen kann die interaction detection engine 112 dann derart konfiguriert sein, dass die Absichtsinformation nur weiterverarbeitet bzw. ausgegeben wird, wenn die Entfernungsinformation dem vorgegebenen Wertebereich entspricht.

Vorteilhaft kann weiterhin der Person 40 ein Hinweis durch das Anwesenheitserfassungs-Terminal 10 gegeben werden, ab wann sich die Person 40 nahe genug am Anwesenheitserfassungs-Terminal 10 befindet und demnach eine Buchung möglich ist. So ist nach jenem Ausführungsbeispiel die Steuereinheit 11 derart eingerichtet, dass, wenn die detektierte Präsenzinformation der Person 40 einem vorgegebenen Wertebereich entspricht, eine Initiierungs-Information an die Person 40 zur Mitteilung, dass die Interaktion möglich ist, ausgegeben wird.

Die Initiierungs-Information kann ein Sprachsignal oder ein akustisches Signal, und/oder ein grafisches Signal, und/oder ein haptisches Signal, insbesondere ein Vibrationssignal, sein. Die Die Initiierungs-Information am Anwesenheitserfassungs-Terminal 10, etwa über einen Lautsprecher oder Display des Anwesenheitserfassungs-Terminals 10, oder aber auch an einem mobilen Zutrittsmedium der Person 40, wie etwa seinem mobilen Endgerät ausgegeben werden.

Wenn die Speicherverwaltungseinheit 20 wie bevorzugt einen Stammsatz personenspezifischer Daten umfasst, dann ist Speicherverwaltungseinheit 20 bevorzugt derart eingerichtet, dass, wenn die Initiierungs-Information an die Person 40 ausgegeben werden soll, die Speicherverwaltungseinheit 20 in den Daten der Person 40 überprüft, welcher Typ an Initiierungs-Information durch die Person 40 gewünscht ist. Auf diese Weise kann besonders vorteilhaft auf die individuellen Bedürfnisse oder Voraussetzungen der Person 40 eingegangen werden. So könnte eine Person 40 mit Sehbehinderung etwa bevorzugt ein akustisches Signal bzw. Sprachsignal als Initiierungs-Information ausgegeben bekommen und nicht etwa ein grafisches Signal, während es sich bei einer Person 40 mit einer Hörbehinderung genau umgekehrt verhält. Auch können sprachliche bzw. Text umfassende Signale als Initiierungs-Information individuell an die Person 40 angepasst in ihrer jeweiligen Sprache ausgegeben werden. Analog verhält es sich bei eventuellen Feedback-Informationen, die ebenso personenspezifisch ausgegeben werden können, da personenspezifisch Informationen im Stammsatz der Daten in der Speicherverwaltungseinheit 20 hinterlegt sind.

## Patentansprüche

1. Anwesenheitserfassungs-Terminal (10), nämlich Zeiterfassungs-Terminal, zur Erfassung einer Anwesenheitsinformation einer Person (40) auf Basis einer Aktion der Person (40), umfassend:
- eine Steuereinheit (11),
- wenigstens eine Sensoreinheit (12), wobei die Sensoreinheit (12) zur Beobachtung einer Umgebungszone (30) eingerichtet ist, und
- eine intent engine (112), wobei die intent engine (112) zur Erfassung einer Absicht einer Interaktion der Person (40) mit dem Anwesenheitserfassungs-Terminal (10) und zur Ausgabe einer Absichtsinformation eingerichtet ist,
wobei die Steuereinheit (11) eingerichtet ist, das Anwesenheitserfassungs-Terminal (10) wenigstens in einen ersten Betriebszustand und in einen zweiten Betriebszustand zu versetzen, wobei das Anwesenheitserfassungs-Terminal (10) in dem zweiten Betriebszustand in einen energiesparenden Modus im Vergleich zu dem ersten Betriebszustand versetzt ist,
wobei die Steuereinheit (11) derart eingerichtet ist, dass das Anwesenheitserfassungs-Terminal (10) in Abhängigkeit von der Absichtsinformation von dem zweiten Betriebszustand in den ersten Betriebszustand wechselt,
**dadurch gekennzeichnet, dass**
die Steuereinheit (11) eingerichtet ist, das Anwesenheitserfassungs-Terminal (10) wenigstens in einen dritten Betriebszustand zu versetzen, wobei das Anwesenheitserfassungs-Terminal (10) in dem dritten Betriebszustand in einen energiesparenden Modus im Vergleich zu dem zweiten Betriebszustand versetzt ist, ferner umfassend eine Speicherverwaltungseinheit (20), wobei die Speicherverwaltungseinheit (20) Arbeitszeit-Daten umfasst, wobei das Anwesenheitserfassungs-Terminal (10) derart eingerichtet ist, dass zumindest eine der folgenden Bedingungen erfüllt ist:
- das Anwesenheitserfassungs-Terminal (10) ist lediglich außerhalb einer regulären Arbeitszeit in den dritten Betriebszustand versetzbar, und/oder
- das Anwesenheitserfassungs-Terminal (10) ist in einem vorgegebenen Zeitraum einer/der regulären Arbeitszeit, insbesondere zu Beginn und/oder zu Ende der regulären Arbeitszeit, in den ersten Betriebszustand versetzt und nicht in den zweiten Betriebszustand versetzbar.

2. Anwesenheitserfassungs-Terminal (10) nach Anspruch 1, wobei die Umgebungszone (30) in eine Mehrzahl an Unterzonen aufgeteilt ist, wobei, vorzugsweise, die Mehrzahl an Unterzonen zumindest folgende Unterzonen umfasst:
- eine Nahzone (31), sowie
- eine Fernzone (32),
wobei die Nahzone (31) näher an dem Anwesenheitserfassungs-Terminal (10) angeordnet ist als die Fernzone (32),
wobei, insbesondere, die Steuereinheit (11) derart eingerichtet ist, dass das Anwesenheitserfassungs-Terminal (10) lediglich in den ersten Betriebszustand versetzbar ist, wenn die Person (40) in der Nahzone (31) detektiert wird.

3. Anwesenheitserfassungs-Terminal (10) nach den Ansprüchen 1 bis 2, wobei die Steuereinheit (11) derart eingerichtet ist, dass das Anwesenheitserfassungs-Terminal (10) automatisch in den zweiten Betriebszustand versetzt wird, wenn die Person (40) in der Fernzone (32) und gleichzeitig keine Person in der Nahzone (31) detektiert wird.

4. Anwesenheitserfassungs-Terminal (10) nach einem der Ansprüche 1 bis 3, ferner umfassend wenigstens einen ersten Prozessor sowie einen zweiten Prozessor, wobei der erste Prozessor zumindest zum Durchführen des Versetzens des Anwesenheitserfassungs-Terminals (10) in den ersten Betriebszustand, sowie vorzugsweise weiterhin in den zweiten Betriebszustand, eingerichtet ist und wobei der zweite Prozessor zumindest zum Betreiben der wenigstens einen Sensoreinheit (12) und/oder der intent engine (112) eingerichtet ist,
wobei, vorzugsweise, der zweite Prozessor leistungsärmer als der erste Prozessor ist.

5. Anwesenheitserfassungs-Terminal nach einem der Ansprüche 1 bis 4, wobei die Sensoreinheit (12) wenigstens eine der folgenden Einheiten umfasst:
- wenigstens eine Kamera (121),
- wenigstens einen biometrischen Sensor (122),
- wenigstens einen Annäherungssensor (123), und/oder
- wenigstens eine mobile access engine (124), wobei die mobile access engine (124) der Sensoreinheit (12) so konfiguriert ist, dass, um die Person (40) in der Umgebungszone (30) zu detektieren, ein Kommunikationsaustausch zwischen der mobile access engine (124) und einem mobilen Zutrittsmedium der Person (40) stattfindet.

6. Computerimplementiertes Verfahren zum Betreiben eines Anwesenheitserfassungs-Terminals (10), nämlich Zeiterfassungs-Terminals, zur Erfassung einer Anwesenheitsinformation einer Person (40) auf Basis einer Aktion der Person (40), umfassend die Schritte:
- Beobachten einer Umgebungszone (30) mit wenigstens einer Sensoreinheit (12),
- Erfassen einer Absicht einer Interaktion der Person (40) mit dem Anwesenheitserfassungs-Terminal (10) durch eine intent engine (112), wobei eine Absichtsinformation generiert wird, und
- Versetzen des Anwesenheitserfassungs-Terminals (10) von einem zweiten Betriebszustand in einen ersten Betriebszustand, wobei das Anwesenheitserfassungs-Terminal (10) in dem zweiten Betriebszustand in einem energiesparenden Modus im Vergleich zu dem ersten Betriebszustand betrieben wird,
wobei zuerst die Absicht der Interaktion der Person (40) mit dem Anwesenheitserfassungs-Terminal (10) erfasst wird und sodann das Anwesenheitserfassungs-Terminal (10) in Abhängigkeit von der Absichtsinformation von dem zweiten Betriebszustand in den ersten Betriebszustand wechselt,
**dadurch gekennzeichnet, dass**
das Anwesenheitserfassungs-Terminal (10) in einen dritten Betriebszustand versetzt werden kann, wobei das Anwesenheitserfassungs-Terminal (10) in dem dritten Betriebszustand in einem energiesparenden Modus im Vergleich zu dem zweiten Betriebszustand betrieben wird,
wobei eine reguläre Arbeitszeit vorgegeben oder hinterlegt wird und wobei:
- das Versetzen des Anwesenheitserfassungs-Terminals (10) in den dritten Betriebszustand lediglich außerhalb der regulären Arbeitszeit erfolgen kann, und/oder
- in einem vorgegebenen Zeitraum der regulären Arbeitszeit, insbesondere zu Beginn und/oder zu Ende der regulären Arbeitszeit, das Anwesenheitserfassungs-Terminal (10) in den ersten Betriebszustand versetzt wird und das Versetzen des Anwesenheitserfassungs-Terminals (10) in den zweiten Betriebszustand gesperrt wird.

7. Computerimplementiertes Verfahren nach Anspruch 6, wobei die Umgebungszone (30) in eine Mehrzahl an Unterzonen aufgeteilt ist, wobei, vorzugsweise, die Mehrzahl an Unterzonen zumindest folgende Unterzonen umfasst:
- eine Nahzone (31), sowie
- eine Fernzone (32),
wobei die Nahzone (31) näher an dem Anwesenheitserfassungs-Terminal (10) angeordnet ist als die Fernzone (32),
wobei, insbesondere, der Schritt des Versetzens des Anwesenheitserfassungs-Terminals (10) von dem zweiten Betriebszustand in den ersten Betriebszustand lediglich erfolgen kann, wenn die Person (40) in der Nahzone (31) detektiert wird.

8. Computerimplementiertes Verfahren nach den Ansprüchen 6 bis 7, wobei ein Versetzen des Anwesenheitserfassungs-Terminals (10) automatisch in den zweiten Betriebszustand erfolgt, wenn die Person (40) in der Fernzone (32) und gleichzeitig keine Person in der Nahzone (31) detektiert wird.

9. Computerimplementiertes Verfahren nach einem der Ansprüche 6 bis 8, wobei der Schritt des Versetzens des Anwesenheitserfassungs-Terminals (10) von dem zweiten Betriebszustand in den ersten Betriebszustand, sowie vorzugsweise weiterhin der Schritt des Versetzens des Anwesenheitserfassungs-Terminals (10) in den zweiten Betriebszustand, mittels eines ersten Prozessors durchgeführt wird, und wobei der Schritt des Beobachtens einer Umgebungszone (30) mit der Sensoreinheit (12) und/oder der Schritt des Erfassens der Absicht der Interaktion der Person (40) mit dem Anwesenheitserfassungs-Terminal (10) durch die intent engine (112) mittels eines zweiten Prozessors durchgeführt wird, wobei, vorzugsweise, der zweite Prozessor leistungsärmer als der erste Prozessor ist.

10. Computerimplementiertes Verfahren nach einem der Ansprüche 6 bis 9, wobei die Sensoreinheit (12) die Umgebungszone (30) mittels wenigstens einer der folgenden Einheiten beobachtet:
- wenigstens eine Kamera (121),
- wenigstens einen biometrischen Sensor (122),
- wenigstens einen Annäherungssensor (123), und/oder
- wenigstens eine mobile access engine (124), wobei die mobile access engine (124) der Sensoreinheit (12) mit einem mobilen Zutrittsmedium der Person (40) kommuniziert, um die Person (40) in der Umgebungszone (30) zu detektieren.

11. Computerprogramm, umfassend Befehle, die bei der Ausführung des Programms durch einen Prozessor eines Anwesenheitserfassungs-Terminals (10), nämlich Zeiterfassungs-Terminals, das Anwesenheitserfassungs-Terminal (10) veranlassen, die Schritte des Verfahrens nach einem der Ansprüche 6 bis 10 auszuführen.

## Claims

1. An attendance recording terminal (10), namely a time recording terminal, for recording an item of attendance information of a person (40) on the basis of an action of the person (40), comprising:
- a control unit (11),
- at least one sensor unit (12), wherein the sensor unit (12) is configured to monitor a surrounding zone (30), and
- an intent engine (112), wherein the intent engine (112) is configured to record an intention of an interaction of the person (40) with the attendance recording terminal (10) and to output an item of intention information,
wherein the control unit (11) is configured to set the attendance recording terminal (10) at least to a first operating state and a second operating state, wherein, in the second operating state, the attendance recording terminal (10) is set to an energy-saving mode compared to the first operating state,
wherein the control unit (11) is configured in such manner that the attendance recording terminal (10) switches from the second operating state to the first operating state as a function of the intention information,
**characterised in that**
the control unit (11) is configured to set the attendance recording terminal (10) at least to a third operating state, wherein, in the third operating state, the attendance recording terminal (10) is set to an energy-saving mode compared to the second operating state,
further comprising a memory management unit (20), wherein the memory management unit (20) comprises working time data, wherein the attendance recording terminal (10) is configured in such manner that at least one of the following conditions is met:
- the attendance recording terminal (10) can be set to the third operating state only outside of a regular working time, and/or
- the attendance recording terminal (10) is set to the first operating state in a predefined period of a/the regular working time, in particular at the start and/or end of the regular working time, and cannot be set to the second operating state.

2. The attendance recording terminal (10) according to claim 1, wherein the surrounding zone (30) is divided into a plurality of sub-zones, wherein, preferably, the plurality of sub-zones comprises at least the following sub-zones:
- a near zone (31), and
- a far zone (32),
wherein the near zone (31) is arranged closer to the attendance recording terminal (10) than the far zone (32),
wherein, in particular, the control unit (11) is configured in such manner that the attendance recording terminal (10) can be set to the first operating state only when the person (40) is detected in the near zone (31).

3. The attendance recording terminal (10) according to claims 1 to 2, wherein the control unit (11) is configured in such manner that the attendance recording terminal (10) is automatically set to the second operating state when the person (40) is detected in the far zone (32) and, at the same time, no person is detected in the near zone (31).

4. The attendance recording terminal (10) according to one of claims 1 to 3, further comprising at least one first processor and one second processor, wherein the first processor is configured at least to carry out the setting of the attendance recording terminal (10) to the first operating state, and preferably also to the second operating state, and wherein the second processor is configured at least to operate the at least one sensor unit (12) and/or the intent engine (112),
wherein, preferably, the second processor has lower processing power than the first processor.

5. The attendance recording terminal according to one of claims 1 to 4, wherein the sensor unit (12) comprises at least one of the following units:
- at least one camera (121),
- at least one biometric sensor (122),
- at least one proximity sensor (123), and/or
- at least one mobile access engine (124), wherein the mobile access engine (124) of the sensor unit (12) is configured such that, in order to detect the person (40) in the surrounding zone (30), a communication exchange takes place between the mobile access engine (124) and a mobile access medium of the person (40).

6. A computer-implemented method for operating an attendance recording terminal (10), namely a time recording terminal, for recording an item of attendance information of a person (40) on the basis of an action of the person (40), comprising the steps:
- Monitoring a surrounding zone (30) with at least one sensor unit (12),
- Recording an intention of an interaction of the person (40) with the attendance recording terminal (10) by way of an intent engine (112), wherein an item of intention information is generated, and
- Setting the attendance recording terminal (10) from a second operating state to a first operating state, wherein, in the second operating state, the attendance recording terminal (10) is operated in an energy-saving mode compared to the first operating state,
wherein the intention of the interaction of the person (40) with the attendance recording terminal (10) is first recorded, and the attendance recording terminal (10) then switches from the second operating state to the first operating state as a function of the intention information,
**characterised in that**
the attendance recording terminal (10) can be set to a third operating state, wherein, in the third operating state, the attendance recording terminal (10) is operated in an energy-saving mode compared to the second operating state,
wherein a regular working time is predefined or stored, and wherein:
- the attendance recording terminal (10) can be set to the third operating state only outside of the regular working time, and/or
- in a predefined period of the regular working time, in particular at the start and/or end of the regular working time, the attendance recording terminal (10) is set to the first operating state and the setting of the attendance recording terminal (10) to the second operating state is locked.

7. The computer-implemented method according to claim 6, wherein the surrounding zone (30) is divided into a plurality of sub-zones, wherein, preferably, the plurality of sub-zones comprises at least the following sub-zones:
- a near zone (31), and
- a far zone (32),
wherein the near zone (31) is arranged closer to the attendance recording terminal (10) than the far zone (32),
wherein, in particular, the step of setting the attendance recording terminal (10) from the second operating state to the first operating state can take place only when the person (40) is detected in the near zone (31).

8. The computer-implemented method according to claims 6 to 7, wherein the attendance recording terminal (10) is automatically set to the second operating state when the person (40) is detected in the far zone (32) and, at the same time, no person is detected in the near zone (31).

9. The computer-implemented method according to one of claims 6 to 8, wherein the step of setting the attendance recording terminal (10) from the second operating state to the first operating state, and preferably also the step of setting the attendance recording terminal (10) to the second operating state, is carried out by means of a first processor, and wherein the step of monitoring a surrounding zone (30) with the sensor unit (12) and/or the step of recording the intention of the interaction of the person (40) with the attendance recording terminal (10) by the intent engine (112) is carried out by means of a second processor,
wherein, preferably, the second processor has lower processing power than the first processor.

10. The computer-implemented method according to one of claims 6 to 9, wherein the sensor unit (12) monitors the surrounding zone (30) by means of at least one of the following units:
- at least one camera (121),
- at least one biometric sensor (122),
- at least one proximity sensor (123), and/or
- at least one mobile access engine (124), wherein the mobile access engine (124) of the sensor unit (12) communicates with a mobile access medium of the person (40) in order to detect the person (40) in the surrounding zone (30).

11. A computer program comprising commands which, when the program is executed by a processor of an attendance recording terminal (10), namely a time recording terminal, causes the attendance recording terminal (10) to perform the steps of the method according to one of claims 6 to 10.

## Revendications

1. Terminal de détection de la présence (10), à savoir terminal de détection de temps, pour la détection d'une information de présence d'une personne (40) sur la base d'une action de la personne (40), comprenant :
- une unité de commande (11),
- au moins une unité de capteur (12), dans lequel l'unité de capteur (12) est conçue pour la surveillance d'une zone environnante (30), et
- un moteur d'intention (112), dans lequel le moteur d'intention (112) est conçu pour la détection d'une intention d'une interaction de la personne (40) avec le terminal de détection de la présence (10) et pour l'émission d'une information d'intention,
dans lequel l'unité de commande (11) est conçue pour placer le terminal de détection de la présence (10) au moins dans un premier état de fonctionnement et dans un deuxième état de fonctionnement, dans lequel le terminal de détection de la présence (10) est, dans le deuxième état de fonctionnement, placé dans un mode d'économie d'énergie par comparaison avec le premier état de fonctionnement,
dans lequel l'unité de commande (11) est conçue de telle sorte que le terminal de détection de la présence (10) passe du deuxième état de fonctionnement au premier état de fonctionnement en fonction de l'information d'intention,
**caractérisé en ce que**
l'unité de commande (11) est conçue pour placer le terminal de détection de la présence (10) au moins dans un troisième état de fonctionnement, dans lequel le terminal de détection de la présence (10) est, dans le troisième état de fonctionnement, placé dans un mode d'économie d'énergie par comparaison avec le deuxième état de fonctionnement,
comprenant en outre une unité de gestion de mémoire (20), dans lequel l'unité de gestion de mémoire (20) comprend des données de temps de travail, dans lequel le terminal de détection de la présence (10) est conçu de telle sorte qu'au moins l'une des conditions suivantes est remplie :
- le terminal de détection de la présence (10) ne peut être placé dans le troisième mode de fonctionnement qu'en dehors d'un temps de travail normal, et/ou
- le terminal de détection de la présence (10) est placé dans le premier mode de fonctionnement pendant une période donnée d'un/du temps de travail normal, en particulier au début et/ou à la fin du temps de travail normal, et ne peut pas être placé dans le deuxième mode de fonctionnement.

2. Terminal de détection de la présence (10) selon la revendication 1, dans lequel la zone environnante (30) est divisée en une pluralité de sous-zones, dans lequel, de préférence, la pluralité de sous-zones comprend au moins les sous-zones suivantes :
- une zone proche (31), ainsi que
- une zone éloignée (32),
dans lequel la zone proche (31) est agencée plus près du terminal de détection de la présence (10) que la zone éloignée (32),
dans lequel, en particulier, l'unité de commande (11) est conçue de telle sorte que le terminal de détection de la présence (10) ne peut être placé dans le premier état de fonctionnement que lorsque la personne (40) est repérée dans la zone proche (31).

3. Terminal de détection de la présence (10) selon les revendications 1 à 2, dans lequel l'unité de commande (11) est conçue de telle sorte que le terminal de détection de la présence (10) est placé automatiquement dans le deuxième état de fonctionnement lorsque la personne (40) est repérée dans la zone éloignée (32) et qu'aucune personne n'est repérée simultanément dans la zone proche (31).

4. Terminal de détection de la présence (10) selon l'une des revendications 1 à 3, comprenant en outre au moins un premier processeur ainsi qu'un second processeur, dans lequel le premier processeur est conçu au moins pour la réalisation du placement du terminal de détection de la présence (10) dans le premier état de fonctionnement, ainsi que, de préférence, dans le deuxième état de fonctionnement, et dans lequel le second processeur est conçu au moins pour le fonctionnement de l'au moins une unité de capteur (12) et/ou le moteur d'intention (112),
dans lequel, de préférence, le second processeur a une performance inférieure à celle du premier processeur.

5. Terminal de détection de la présence selon l'une des revendications 1 à 4, dans lequel l'unité de capteur (12) comprend au moins l'une des unités suivantes :
- au moins une caméra (121),
- au moins un capteur biométrique (122),
- au moins un capteur de proximité (123), et/ou
- au moins un moteur d'accès mobile (124), dans lequel le moteur d'accès mobile (124) de l'unité de capteur (12) est configuré de telle sorte que, pour repérer la personne (40) dans la zone environnante (30), un échange de communications a lieu entre le moteur d'accès mobile (124) et un support d'accès mobile de la personne (40).

6. Procédé mis en œuvre par ordinateur pour le fonctionnement d'un terminal de détection de la présence (10), à savoir terminal de détection de temps, pour la détection d'une information de présence d'une personne (40) sur la base d'une action de la personne (40), comprenant les étapes de :
- surveillance d'une zone environnante (30) avec au moins une unité de capteur (12),
- détection, par un moteur d'intention (112), d'une intention d'une interaction de la personne (40) avec le terminal de détection de la présence (10), dans lequel une information d'intention est générée, et
- placement du terminal de détection de la présence (10) d'un deuxième état de fonctionnement à un premier état de fonctionnement, dans lequel le terminal de détection de la présence (10) fonctionne, dans le deuxième état de fonctionnement, dans un mode d'économie d'énergie par comparaison avec le premier état de fonctionnement,
dans lequel l'intention de l'interaction de la personne (40) avec le terminal de détection de la présence (10) est d'abord détectée, puis le terminal de détection de la présence (10) passe du deuxième état de fonctionnement au premier état de fonctionnement en fonction de l'information d'intention,
**caractérisé en ce que**
le terminal de détection de la présence (10) peut être placé dans un troisième état de fonctionnement, dans lequel le terminal de détection de la présence (10) fonctionne alors, dans le troisième état de fonctionnement, dans un mode d'économie d'énergie par comparaison avec le deuxième état de fonctionnement,
dans lequel un temps de travail normal est donné ou enregistré, et dans lequel :
- le placement du terminal de détection de la présence (10) dans le troisième mode de fonctionnement ne peut être effectué qu'en dehors du temps de travail normal, et/ou
- pendant une période donnée du temps de travail normal, en particulier au début et/ou à la fin du temps de travail normal, le terminal de détection de la présence (10) est placé dans le premier état de fonctionnement et le placement du terminal de détection de la présence (10) dans le deuxième état de fonctionnement est bloqué.

7. Procédé mis en œuvre par ordinateur selon la revendication 6, dans lequel la zone environnante (30) est divisée en une pluralité de sous-zones, dans lequel, de préférence, la pluralité de sous-zones comprend au moins les sous-zones suivantes :
- une zone proche (31), ainsi que
- une zone éloignée (32),
dans lequel la zone proche (31) est agencée plus près du terminal de détection de la présence (10) que la zone éloignée (32),
dans lequel, en particulier, l'étape de placement du terminal de détection de la présence (10) du deuxième état de fonctionnement au premier état de fonctionnement ne peut être effectué que si la personne (40) est repérée dans la zone proche (31).

8. Procédé mis en œuvre par ordinateur selon les revendications 6 à 7, dans lequel le placement du terminal de détection de la présence (10) dans le deuxième état de fonctionnement est effectué automatiquement lorsque la personne (40) est repérée dans la zone éloignée (32) et qu'aucune personne n'est repérée simultanément dans la zone proche (31).

9. Procédé mis en oeuvre par ordinateur selon l'une des revendications 6 à 8, dans lequel l'étape de placement du terminal de détection de la présence (10) du deuxième état de fonctionnement au premier état de fonctionnement, ainsi que, de préférence, l'étape de placement du terminal de détection de la présence (10) dans le deuxième état de fonctionnement, est réalisée par le biais d'un premier processeur, et dans lequel l'étape de surveillance d'une zone environnante (30) avec l'unité de capteur (12) et/ou l'étape de détection de l'intention de l'interaction de la personne (40) avec le terminal de détection de la présence (10) par le moteur d'intention (112) est réalisée par le biais d'un second processeur,
dans lequel, de préférence, le second processeur a une performance inférieure à celle du premier processeur.

10. Procédé mis en œuvre par ordinateur selon l'une des revendications 6 à 9, dans lequel l'unité de capteur (12) observe la zone environnante (30) par le biais d'au moins l'une des unités suivantes :
- au moins une caméra (121),
- au moins un capteur biométrique (122),
- au moins un capteur de proximité (123), et/ou
- au moins un moteur d'accès mobile (124), dans lequel le moteur d'accès mobile (124) de l'unité de capteur (12) communique avec un support d'accès mobile de la personne (40) afin de repérer la personne (40) dans la zone environnante (30).

11. Programme d'ordinateur comprenant des instructions qui, lors de l'exécution du programme par un processeur d'un terminal de détection de la présence (10), à savoir un terminal de détection de temps, amènent le terminal de détection de la présente (10) à exécuter les étapes du procédé selon l'une des revendications 6 à 10.
